(19) **Europäisches Patentamt European Patent Office Office européen des brevets**

(11) **EP 4 102 181 B1**

(12) **FASCICULE DE BREVET EUROPEEN**

(45) Date de publication et mention de la délivrance du brevet:
**22.10.2025 Bulletin 2025/43**

(21) Numéro de dépôt: **22178182.6**

(22) Date de dépôt: **09.06.2022**

(51) Classification Internationale des Brevets (IPC):
**G01C 19/64** *(2006.01)* **G01C 19/60** *(2006.01)*
**G21K 1/00** *(2006.01)* **H05H 3/00** *(2006.01)*
**H05H 3/02** *(2006.01)* **H05H 3/04** *(2006.01)*

(52) Classification Coopérative des Brevets (CPC):
**G01C 19/60; G01C 19/64**

(54) **PUCE ATOMIQUE A SURFACE CONDUCTRICE POUR CAPTEUR INERTIEL A ATOMES ULTRAFROIDS ET CAPTEUR ASSOCIE**

ATOMCHIP MIT LEITENDER OBERFLÄCHE FÜR EINEN TRÄGHEITSSENSOR MIT ULTRAKALTEN ATOMEN UND ENTSPRECHENDER SENSOR

ATOMIC CHIP WITH CONDUCTIVE SURFACE FOR INERTIAL SENSOR WITH ULTRACOLD ATOMS AND ASSOCIATED SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.06.2021 FR 2106120**

(43) Date de publication de la demande:
**14.12.2022 Bulletin 2022/50**

(73) Titulaire: **THALES**
**92190 Meudon (FR)**

(72) Inventeurs:
• **WIRTSCHAFTER, Benjamin**
**91767 Palaiseau Cedex (FR)**
• **DUPONT-NIVET, Matthieu**
**91767 Palaiseau Cedex (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**WO-A1-2017/089489**

## Description

## DOMAINE DE L'INVENTION

La présente invention concerne le domaine des capteurs inertiels à atomes ultrafroids. Plus particulièrement l'invention porte sur des puces et les capteurs associés permettant la mesure d'une vitesse angulaire selon un ou trois axes de mesure.

## ETAT DE LA TECHNIQUE

Le document WO2017089489 décrit un capteur inertiel (gyroscope) à atomes ultrafroids sur puce utilisant des ondes de matière piégées décrivant des trajectoires fermées incluant une aire, dont la structure et le principe de fonctionnement sont rappelés ci-dessous.

Les mesures de rotation sur ce type de dispositif sont effectuées en exploitant l'effet Sagnac. Le déphasage $\theta$ induit par effet Sagnac entre deux ondes de matière contrarotatives dans un référentiel tournant à la vitesse angulaire $\Omega$, est donné par :

$$\theta = \frac{2Am}{\hbar}\,\Omega \qquad (1)$$

où $A$ est l'aire inscrite dans les trajectoires atomiques, m la masse des atomes et $\hbar$ la constante de Planck réduite.

On définit par atomes ultrafroids des atomes dont la température est inférieure à 400 nanokelvins, préférentiellement à 300 nanokelvins. La température d'atomes ultrafroids thermiques est, par exemple pour des atomes de Rubidium, comprise entre 50 et 400 nanokelvins et préférentiellement entre 100 et 300 nanokelvins.

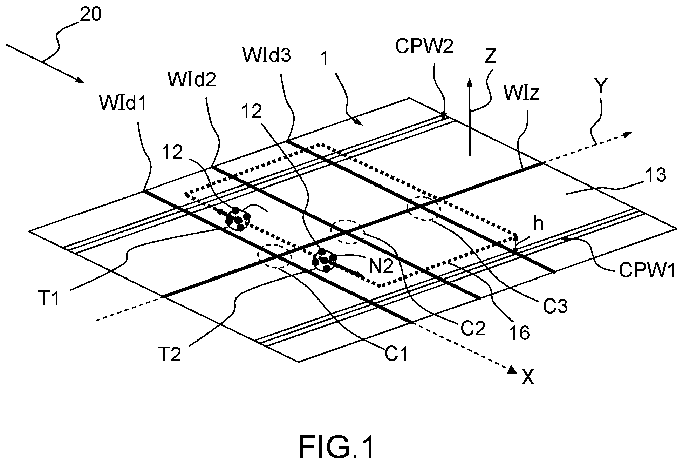

Le principe est de réaliser une trajectoire parcourue de manière contrapropagative par deux nuages d'atomes piégés magnétiquement. La réalisation et le déplacement du piège magnétique selon la trajectoire sont réalisés par des fils conducteurs et des guides microondes selon par exemple la topologie illustrée figure 1.

La figure 1 illustre schématiquement une puce 1 à atomes ultrafroids 12 ainsi que la trajectoire 16 de deux nuages atomiques N1 et N2. Une partie de la surface de la puce 1 forme un plan de mesure 13. Un axe normal au plan de mesure 13 définit l'axe de mesure Z, selon lequel une mesure de rotation $\Omega z$ est réalisée par le gyromètre.

La puce 1 comprend des moyens adaptés à générer un premier piège à atomes ultrafroids T1 et un deuxième piège à atomes ultrafroids T2, un piège permettant d'immobiliser un nuage d'atomes ultrafroids 12 dans un état interne différent de l'autre piège, à une distance prédéterminée h dudit plan de mesure 13. Par exemple le piège T1 comprend les atomes dans le niveau électronique ou état |a> (nuage N1) et le piège T2 comprend des atomes dans l'état |b> (nuage N2). Les niveaux |a> et |b> sont espacés d'une fréquence $\omega_0/2\pi$. Par exemple dans le cas du rubidium 87 il s'agit des deux niveaux hyperfins |F=1,m$_F$=-1> et |F=2,m$_F$=1 >, espacés d'environ 6,8 GHz.

Ces moyens permettent également de déplacer les nuages selon la trajectoire 16 localisée dans un plan parallèle au plan de mesure 13, à une hauteur h de ce plan, tel qu'illustré figure 1.

Ces moyens sont constitués de guides d'onde et de fils conducteurs tels que décrits ci-dessous.

Les moyens comprennent un premier guide d'onde CPW1 et un deuxième guide d'onde CPW2 adaptés à la propagation de micro-ondes à des pulsations $\omega_a$ et $\omega_b$. Les guides d'onde sont parallèles et disposés symétriquement par rapport à un axe Y du plan de mesure. Les deux guides d'ondes CPW1 et CPW2 sont connectés à au moins un générateur de tension ou de courant à fréquences micro-ondes. Par exemple chacun des guides d'onde est réalisé par le dépôt de trois fils conducteurs parallèles pour réaliser un guide d'onde coplanaire. Dans d'autres réalisations on peut utiliser d'autres types de guides d'onde, en particulier des guides d'onde dont la fabrication est compatible avec les techniques de microfabrication par dépôt ou par gravure. On peut, par exemple, réaliser une ligne à microruban.

Les moyens comprennent également des fils conducteurs intégrés à la puce 1 et adaptés à être traversés par des courants continus. Les fils conducteurs sont répartis en un fil conducteur Wlz selon un axe de symétrie Y perpendiculaire à X et compris dans le plan de mesure 13, et en une pluralité de n fils conducteurs Wldi, i indice variant de 1 à n, parallèles entre eux et parallèles à l'axe X, n étant au moins égal à 2. Dans l'exemple de la figure 1 n=3, soit trois fils conducteurs Wld1, Wld2 et Wld3. Les fils sont agencés de manière à définir n points de croisement Ci (croisement entre Wlz et Wldi) localisés sur l'axe Y, ici 3 points de croisement C1, C2, C3.

Chaque fil conducteur est relié à un ou plusieurs générateurs de courant et/ou de tension, eux-mêmes reliés à une unité de traitement comportant au moins un microprocesseur. Les générateurs de tension et/ou de courant permettent de piloter aussi bien des courants continus que des courants alternatifs dans les fils. En particulier, des courants continus sont pilotés dans les fils conducteurs.

Dans le capteur, la puce à atomes 1 est placée dans une enceinte à vide entretenu, par exemple, à l'aide d'une pompe ionique et comportant préférentiellement un blindage magnétique. L'enceinte à vide comporte une source d'atomes ultrafroids. La source d'atomes ultrafroids est définie par :

- un émetteur d'atomes (*dispenser* en anglais), par exemple réalisé par un filament chauffant délivrant une vapeur de rubidium ;

- un piège primaire à atomes (optique et/ou magnétique) dénommé MOT, permettant de pré-refroidir les atomes et un dispositif de chargement pour disposer le nuage d'atomes ultrafroids issus du MOT au voisinage de la puce, afin de charger en atomes les pièges magnétiques T1 et T2 décrits ultérieurement.

L'enceinte à vide comporte également une source de champ magnétique, extérieure à la puce 1. Elle permet d'imposer un champ magnétique homogène et stationnaire 20 sur une épaisseur au moins de l'ordre d'une hauteur h au-dessus du plan de mesure 13. Avantageusement, la direction du champ magnétique homogène est parallèle au plan de mesure.

Sur la figure 1 la trajectoire 16 en pointillés illustre la trajectoire des nuages d'atomes ultrafroids 12. Cette trajectoire fermée définit une aire notée A. Une distance h sépare le plan de la trajectoire 16 et le plan de mesure 13 de la puce. Préférentiellement h est compris entre 500 nm et 1 mm, et préférentiellement entre 5 $\mu$m et 500 $\mu$m.

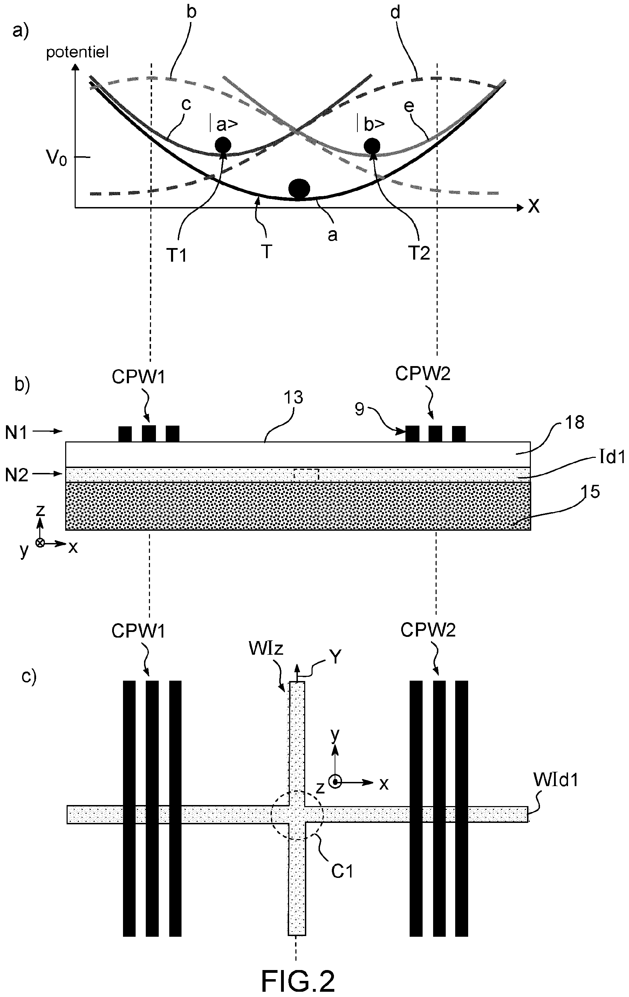

La figure 2 illustre la géométrie des guides et fils de la puce atomique ainsi que les pièges T1 et T2. La génération et principe de fonctionnement de ces pièges sont décrits dans la publication de Ammar et al « Symmetric microwave potential for interferometry with thermal atoms on a chip » Phys. Rev. A91, 053623 (2015).

L'agencement spécifique des fils conducteurs et des guides d'ondes, associé à la source de champ magnétique homogène, permet d'obtenir aisément deux pièges T1 et T2 tels qu'illustrés dans la partie a) de la figure 2. Chaque piège T1 et T2 présente une valeur du minimum V0 non nulle et identique, et une courbure identique, condition nécessaire pour que le capteur fonctionne. En effet, comme expliqué plus loin, lorsqu'un courant continu est appliqué sur au moins deux fils conducteurs d'un point de croisement, le minimum de potentiel est localisé à la verticale de ce point de croisement. Lorsqu'ensuite une puissance hyperfréquence est envoyée dans les guides d'onde, le minimum central se transforme en deux minima de part et d'autre du minimum initial dans la direction des guides d'onde. Si le minimum initial n'est pas situé strictement à égal distance des deux guides d'ondes, les deux minima de potentiels créés n'auront pas rigoureusement la même valeur du minimum V0 et la même courbure.

La partie c) de la figure 2 illustre la disposition des fils conducteurs définissant le point de croisement initial C1 et des guides d'ondes (vue de dessus). La partie b) de la figure 2 décrit la disposition correspondante des fils conducteurs et des guides d'onde imprimés sur une puce en vue de profil, en coupe selon le fil conducteur WId1 qui croise le fil conducteur WIz selon l'axe de symétrie Y. Les guides d'onde CPW1 et CPW2 sont des guides d'onde coplanaires situés sur un premier niveau N1. La couche 18 isolante permet avantageusement d'aplanir le plan de mesure. Le matériau de la couche d'isolant électrique peut être par exemple du dioxyde de silicium, du nitrure de silicium ou benzocyclobutène. Un matériau conducteur est utilisé pour la fabrication des fils conducteurs, par exemple de l'or, et est déposé sur un substrat 15, formant un deuxième niveau N2. Le substrat peut être par exemple en silicium, en nitrure d'aluminium ou en carbure de silicium.

On voit sur la partie a) la séparation symétrique d'atomes ultrafroids, spécifique à l'état interne desdits atomes ultrafroids, et plus précisément les variations de potentiels en fonction de l'axe X de la puce 1.

La courbe « a » en noir présente un puits de potentiel correspondant à l'association du champ magnétique homogène et du champ créé par deux fils conducteurs sécants, le fil WIz parcouru par le courant $I_Z$ et le fil WId1 parcouru par le courant Id1. Il résulte un puits de potentiel local formant un piège atomique T selon trois dimensions, un piège magnétique DC. Un nuage d'atomes ultrafroids peut y être piégé et refroidis.

La courbe « b » en pointillés gris clair présente de manière schématique le potentiel créé par la transmission de micro-ondes à la fréquence $\omega_b$ dans le guide d'onde CPW1. Le champ émis par le passage de micro-ondes à la fréquence $\omega_b$ permet de modifier l'énergie des atomes ultrafroids et de déplacer les atomes d'états internes |b>. La courbe « e » en trait continu gris clair illustre le potentiel vu par les états internes |b> dus aux contributions des potentiels illustrés par la courbe « a » et par la courbe « b ». La courbe « e » présente un minimum local de potentiel permettant de piéger localement un nuage d'atomes ultrafroids d'états internes |b>. Ainsi le champ microonde émis à $\omega b$ dans CPW1 « pousse » les atomes dans l'état |b> du côté opposé au guide d'onde CPW1.

De manière similaire, la courbe « d » en pointillés gris foncé présente de manière schématique le potentiel créé par la transmission de micro-ondes à la fréquence $\omega_a$ dans le guide d'onde CPW2. Le champ émis par le passage de micro-ondes à la fréquence $\omega_a$ permet de modifier l'énergie des atomes ultrafroids et de déplacer les atomes d'états internes |a>. La courbe « c » en trait continu gris foncé illustre le potentiel vu par les atomes d'états internes |a> dû aux contributions des potentiels illustrés par la courbe « a » et par la courbe « d ». La courbe « c » présente un minimum local d'énergie permettant de piéger localement un nuage d'atomes ultrafroids d'états internes la>. Ainsi le champ microonde émis à $\omega a$ dans CPW2 « pousse » les atomes dans l'état |a> du côté opposé au guide d'onde CPW2.

L'association d'un piège magnétique DC (créé par les courants continus dans les fils et le champ homogène 20) et d'un champ micro-onde créé ce qu'on appelle un piège « habillé ». On entend par « habillé » un piège créé au moins en partie par un champ oscillant micro-onde, radio-fréquence ou optique. Les changements des champs micro-ondes (puissance, fréquence et guide dans lequel ils se propagent) permettent de déplacer ce piège habillé et donc de déplacer les atomes. Le piège magnétique DC est représenté sur la figure 2 par la courbe a. Le champ micro-onde à $\omega a$ est repré-

senté sur la figure 2 par la courbe d et le champ micro-onde à $\omega b$ est représenté sur la figure 2 par la courbe b. Le piège habillé T1 (association des courbes a et d pour l'état |a> est représenté par la courbe c et le piège habillé T2 (association des courbes a et b) pour l'état |b> est représenté par la courbe e.

Les nuages d'atomes ultrafroids d'états internes |a> et |b> peuvent être séparés et piégés de manière symétrique par rapport à l'axe de symétrie Y en imposant simultanément la propagation d'ondes de fréquence $\omega_a$ dans CPW2 et $\omega_b$ dans CPW1. Pour obtenir deux pièges dont les minima sont de même valeur V0 et dont les courbures sont de même valeur, il est important que le point de croisement C1 soit disposé à égal distance de CPW1 et CPW2, sur l'axe de symétrie Y.

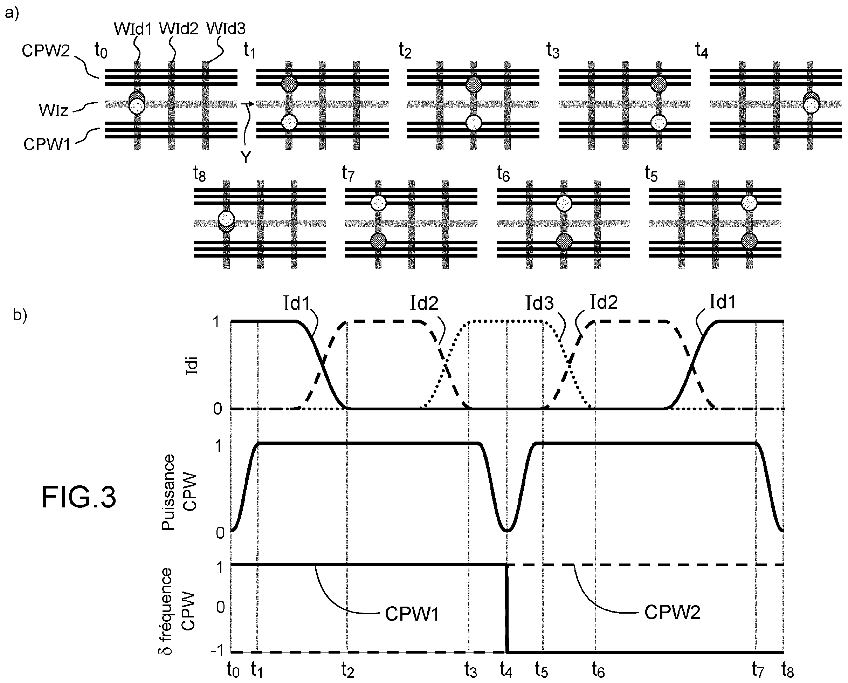

La figure 3 illustre le principe de génération de la trajectoire 16. La partie a) de la figure 3 présente schématiquement une séquence du déplacement de chacun des nuages d'atomes ultrafroids à des temps caractéristiques $t_0$ à $t_8$. La partie b) illustre de manière complémentaire une séquence des différents courants appliqués aux fils conducteurs, des puissances appliquées aux guides d'onde et des fréquences imposées aux guides d'onde, pour les temps correspondant à ceux de la partie a).

Dans la séquence présentée dans la figure 3, le courant $I_z$, non présenté, circulant dans WIz est stationnaire, à une valeur constante. Dans la partie b) les valeurs des courants, des puissances et des fréquences sont arbitraires. L'ordonnée $\delta$ fréquence correspond à une variation de fréquence exprimée en unité arbitraire, autour d'une valeur moyenne de la fréquence. Les courants parcourant les fils conducteurs peuvent être compris entre 100 $\mu$A et 10 A, et les pulsations injectées dans les guides d'onde peuvent être comprises entre 6,6 GHz et 7 GHz dans le cas de l'utilisation d'atomes de rubidium.

Dans une **étape A0,** il y a une phase de préparation des atomes. On génère un nuage d'atomes ultrafroids 12, incluant des phases d'émission desdits atomes, de refroidissement desdits atomes, d'initialisation desdits atomes dans au moins un état interne |a> et de piégeage d'un nuage de dits atomes ultrafroids dans un minimum local de potentiel, à une distance h du plan de mesure (piège T, courbe « a » de la figure 2 partie a)). La hauteur h est différente de 0 car le champ magnétique homogène 20 est non nul. Le piégeage s'effectue par passage de courants continus dans le fil WIz et dans un des fils WIdi, le point de croisement de ces deux fils définissant le point de départ (ici C1 avec WId1). On applique en même temps un champ magnétique de biais 20 parallèle au plan de la puce atomique qui se superpose au champ magnétique créé par les deux fils précédents. Le nuage d'atomes est alors piégé à la verticale de C1, intersection des fils WIz et WId1.

Dans une **étape B0** on initialise les états internes en superposant de manière cohérente lesdits atomes ultrafroids entre lesdits états |a> et |b> par une première impulsion $\pi/2$. Cette impulsion peut être réalisée par un laser, une émission micro-ondes, ou plus généralement par une méthode émettant des ondes à une fréquence de transition adaptée. Les courants $I_Z$ et $I_{d1}$ sont imposés respectivement aux fils conducteurs WIz et WId1. Les deux états internes |a> et |b> sont superposés de manière cohérente et spatialement à l'aplomb du point de croisement C1. Cela correspond à l'instant t0, pour lequel les deux nuages sont dans un même piège T.

La fonction d'onde est alors :

$$\frac{|a> + |b>}{\sqrt{2}} \qquad (2)$$

Dans une **étape C0** on sépare spatialement un nuage d'atomes d'état interne |a> dans un piège T1 d'un nuage d'atomes d'état interne |b> dans un autre piège T2 et on déplace les pièges en sens opposé suivant une trajectoire fermée 16 contenue dans un plan perpendiculaire à l'axe de mesure Z. Le nuage d'atomes d'états internes |a> est symbolisé par un disque de texture foncée et le nuage d'atomes d'états internes |b> est symbolisé par un disque de texture plus claire. Cette étape est réalisée à partir de $t_0$ jusqu'à $t_8$.

Entre $t_0$ et $t_1$, la puissance micro-ondes injectée dans les guides d'onde CPW1 et CPW2, passe progressivement de 0 à sa valeur maximale. Une pulsation $\omega_a$ est envoyée dans le guide d'onde CPW1 et une pulsation $\omega_b$ est envoyée dans le guide d'onde CPW2, ce qui permet de séparer les deux nuages d'états internes différents de part et d'autre de l'axe de symétrie Y, d'une distance d, jusqu'aux positions schématisées dans $t_1$. Le piège T à atomes ultrafroids décrit précédemment à l'instant $t_0$ est alors transformé en deux pièges T1 et T2 à atomes ultrafroids, chaque piège permettant d'immobiliser un nuage d'atomes ultrafroids d'états internes différents de l'autre piège (en l'occurrence d'états internes |a> dans l'un des pièges, par exemple T1, et d'états internes |b> dans l'autre piège T2, comme décrit dans la partie a) de la figure 2.

Un point de croisement Ci correspond au croisement du fil WIz avec le fil WIdi.

Entre $t_1$ et $t_2$, le courant $I_{d1}$ est progressivement coupé et $I_{d2}$ est progressivement porté à sa valeur maximale (l'intervalle de temps séparant $t_1$ et $t_2$ est typiquement de l'ordre de 10 ms et peut être compris entre 0,1 ms et 100 ms : les deux pièges T1 et T2 sont déplacés vers la droite jusqu'aux positions schématisées dans $t_2$.

Entre $t_2$ et $t_3$ le courant $I_{d2}$ est progressivement coupé et $I_{d3}$ est progressivement porté à sa valeur maximale : les deux pièges sont déplacés vers la droite jusqu'aux positions schématisées dans $t_4$.

Entre $t_3$ et $t_4$, la puissance micro-onde est progressivement coupée : les deux pièges sont ramenés au même endroit de la puce, schématisé dans $t_4$.

A $t_4$, les pulsations des deux guides micro-ondes sont modifiées : la pulsation $\omega_b$ est imposée dans CPW1 et la pulsation $\omega_a$ est imposée dans CPW2.

Entre $t_4$ et $t_5$, la puissance dans les deux guides d'onde passe progressivement de 0 à sa valeur maximale : les pièges sont séparés dans la direction verticale comme schématisé dans la figure $t_5$.

Entre $t_5$ et $t_6$, le courant $I_{d3}$ est progressivement coupé et $I_{d2}$ est progressivement porté à sa valeur maximale : les deux pièges T1 et T2 sont déplacés vers la gauche jusqu'aux positions schématisées dans $t_6$.

Entre $t_6$ et $t_7$, le courant $I_{d2}$ est progressivement coupé et $I_{d1}$ est progressivement porté à sa valeur maximale : les deux pièges sont déplacés vers la gauche jusqu'aux positions schématisées dans $t_7$. Cette opération peut être répétée plusieurs fois avec d'autres premiers fils conducteurs pour augmenter l'aire incluse dans la trajectoire 16.

Entre $t_7$ et $t_8$, la puissance micro-onde dans les guides d'onde est progressivement coupée. Les deux pièges T1 et T2 se déplacent jusqu'à fusionner en un seul piège se situant au point de départ schématisé en $t_1$.

On applique ainsi des courants continus aux deux fils correspondant au point de croisement initial C1, et au cours du temps on applique successivement ces courants aux différents points de croisements Ci situés sur l'axe de symétrie, en appliquant simultanément une puissance microonde sur les guides d'ondes.

Pendant l'étape **C0** les courants continus appliqués aux différents fils WIdi varient continûment (augmentation et diminution) entre 0 et une valeur maximale Idimax (normalisée à 1 sur la figure 3), tandis que le champ magnétique 20 et le courant $I_z$ restent constants pendant la séquence. Dans toute la séquence **A0, B0** et **C0** les deux pièges T1 et T2 restent à l'altitude h.

Les deux pièges T1 et T2 se déplacent dans le sens « d'allumage » des points de croisement : du point de croissement C1 vers le point de croisement Cn. Le retour s'effectue en inversant les fréquences microonde et en allument les courants continus successivement dans les fils correspondants aux différents points de croissement en les parcourant de Cn vers C1.

On fait ainsi parcourir aux pièges la trajectoire fermée 16.

La trajectoire fermée 16 des atomes contient alors une aire A, la fonction d'onde atomique est donc :

$$\frac{|a> + \exp(i\varphi)|b>}{\sqrt{2}} \qquad (3)$$

Avec :

$$\varphi = \omega_0 t + \frac{m}{\hbar}\Omega_z A \qquad (4)$$

$\Omega_z$ est la vitesse de rotation angulaire suivant l'axe Z et $\omega_0$ la pulsation correspondante à l'énergie de la transition électronique entre |a> et |b>.

Dans une **étape D0** on recombine les états internes |a> et |b> en appliquant aux atomes ultrafroids une deuxième impulsion $\pi/2$ qui transfert la différence de phase sur les populations des deux niveaux atomiques :

$$p_a = \frac{1}{2}[1 + \cos(\varphi - \omega t)] \qquad (5)$$

$$p_b = \frac{1}{2}[1 - \cos(\varphi - \omega t)] \qquad (6)$$

où $\omega$ est la pulsation de l'impulsion $\pi/2$.

Les impulsions $\pi/2$ peuvent être envoyées aux atomes via les guides micro-ondes ou via un émetteur microonde séparé.

Puis on mesure la densité d'atomes dans un état interne choisi parmi au moins |a> et |b>. Cette mesure peut être effectuée par exemple par absorption laser en sondant la résonance entre la pulsation propre à un état interne et celle du laser.

Enfin dans une **étape E0** on déterminer la phase Sagnac des atomes ultrafroids et on calcule la vitesse de rotation du capteur selon l'axe Z.

La mesure d'au moins une population d'atomes dans un des états |a> ou |b> permet de déterminer la phase Sagnac, par exemple pour l'état interne |a> en considérant l'équation (5), puis la vitesse de rotation $\Omega_z$ avec l'équation (1).

On dénomme « phase de libre évolution » la partie de la séquence d'interférométrie se situant entre les deux impulsions $\pi/2$ soit l'étape C0.

On peut faire parcourir aux pièges cette trajectoire N fois avant de mesurer la phase Sagnac et ainsi mesurer une phase qui sera potentiellement N fois plus élevée.

Ainsi la mesure s'effectue en déplaçant le minimum du champ magnétique contenant les deux pièges habillés (piège crée au moins en partie par le champ oscillant micro-onde) en variant les courants DC d'une certaine façon dans la matrice de fils présents sur la puce (allumage progressif et extinction progressive des fils DC en croix), de sorte que la plus grande aire possible soit obtenue.

Afin de mettre en œuvre le procédé décrit plus haut le capteur à atomes ultrafroids permettant une mesure de vitesse de rotation $\Omega_z$ comprend :

- une puce atomique 1 telle que décrite précédemment, avec les guides d'onde et les fils conducteurs,

- une source d'atomes pour générer le nuage d'atomes ultrafroids près du plan de mesure 13 de la puce atomique,

- un générateur du champ magnétique homogène 20

- au moins un processeur, au moins un générateur de tension ou de courant continu adapté à commander des courants électriques dans les fils conducteurs et au moins un générateur de tension ou de courant micro-ondes connecté aux guides d'ondes,

- un système de détection d'intensité optique adapté à mesurer au moins une population d'atomes ultrafroids dans un état interne, cette mesure permettant la détermination de la phase Sagnac et de la vitesse de rotation $\Omega_z$.

Ce capteur décrit ci-dessus et dans le document WO2017089489 permet uniquement, à partir d'une trajectoire comprise dans un plan parallèle au plan de mesure 13, une mesure de vitesse de rotation selon l'axe Z perpendiculaire au plan de la puce. Pour pouvoir mesurer la vitesse de rotation selon les trois axes, il est nécessaire de disposer de 3 capteurs de ce type, ce qui est couteux, encombrant et complexe à réaliser, particulièrement pour le positionnement respectif des trois axes (le réglage de leur orthogonalité), ce réglage présentant une dérive temporelle qui diminue la précision de l'ensemble. De plus la mesure de $\Omega z$ nécessite une puce avec plusieurs fils conducteurs parallèles Wldi. La présence de ces multiples fils, auxquels on applique successivement différentes tension continues, complexifie la puce et la séquence de séparation/déplacement des pièges.

Un but de la présente invention est de remédier aux inconvénients précités en proposant une puce atomique simplifiée et des capteurs basés sur cette puce, capables de réaliser une mesure de vitesse de rotation selon l'axe Z, mais également une mesure de vitesse de rotation selon trois axes perpendiculaires X, Y et Z. De plus la puce selon l'invention et le capteur associé présentent une sensibilité accrue.

## DESCRIPTION DE L'INVENTION

La présente invention a pour objet une puce atomique pour capteur à atomes ultrafroids, comportant un plan de mesure XY repéré par un axe X et un axe Y orthogonaux, ledit plan de mesure étant normal à un axe Z, la puce atomique comprenant :

- une pluralité de première paires de guides d'ondes, une première paire étant constituée d'un premier et un deuxième guide d'ondes coplanaires, parallèles entre eux et disposés symétriquement de part et d'autre d'un axe dont la projection dans le plan XY est selon l'axe X, dénommées paires de guides selon X,

- une pluralité de deuxième paires de guides d'ondes, une deuxième paire étant constituée d'un premier et un deuxième guide d'ondes coplanaires parallèles entre eux et disposés symétriquement de part et d'autre d'un axe dont la projection dans le plan XY est selon un axe Y' différent de l'axe X, dénommées paires de guides selon Y',

les paires de guides selon X étant isolés électriquement des paires de guides selon Y',

les projections dans le plan XY de la première paire la plus éloignée de X et de la deuxième paire la plus éloignée de Y' formant à leur intersection un parallélogramme de centre O,

- un premier fil conducteur présentant une projection dans le plan XY selon X ou Y' ou une diagonale dudit parallélogramme, le premier fil conducteur étant adapté à être traversé par un courant continu,

- ledit premier fil présentant un évasement de manière à prendre la forme d'une surface dont la projection dans le plan XY englobe ledit parallélogramme et présente une symétrie par rapport au point O.

Selon un mode de réalisation la puce comprend en outre un deuxième fil conducteur coplanaire avec le premier fil conducteur, le premier et le deuxième fils étant orientés respectivement selon X et Y' ou inversement, ou selon une première et une deuxième diagonale du parallélogramme ou inversement.

Selon un mode de réalisation l'axe Y' est confondu avec l'axe Y.

Selon un mode de réalisation ladite surface est choisie parmi : un ovale, un cercle, un polygone, un rectangle, un carré.

Selon un mode de réalisation la puce comprend en outre un premier et un deuxième fils de chargement, conducteurs et isolés électriquement du ou des fils conducteurs, dont les projections dans le plan XY sont sécantes en O.

Selon un mode de réalisation de la puce comprenant deux fils conducteurs, les projections des fils de chargement coïncident avec les projections des fils conducteurs en dehors de la surface.

Selon un mode de réalisation les guides selon X, les guides selon Y', le ou les fils conducteurs, et les fils de chargement occupent chacun un niveau différent de la puce. Préférentiellement les fils de chargement occupent le niveau de la puce le plus éloigné du plan de mesure.

Selon un autre aspect l'invention concerne un capteur à atomes ultrafroids permettant une mesure de vitesse de rotation selon au moins l'axe Z comprenant :

- une puce atomique selon l'invention placée dans une enceinte à vide,

- une source d'atomes agencée pour générer un nuage d'atomes ultrafroids près dudit plan XY de ladite puce atomique,
lesdits atomes ultrafoids présentant, lors de la phase d'initialisation de la mise en œuvre du capteur, une superposition d'états internes |a> et |b>

- un générateur d'un champ magnétique homogène,

- au moins un processeur, au moins un générateur de tension ou de courant continu connectés auxdits fils conducteurs et au moins un générateur de tension ou de courant micro-ondes connecté audits guides d'ondes,

- lesdits guides d'ondes et lesdits fils conducteurs étant configurés, lors de la mise en œuvre du capteur, pour :

  - modifier l'énergie desdits atomes ultrafroids de manière à créer un minima de potentiel pour les atomes ultrafroids dans l'état interne |a> et un minima de potentiel pour les atomes ultrafroids dans l'état interne |b>, formant ainsi un premier et deuxième piège à atomes ultrafroids, un piège permettant d'immobiliser un nuage d'atomes ultrafroids (12) dans un état interne différent de l'autre piège, à une distance maîtrisée dudit plan de mesure, et

  - séparer spatialement les deux pièges et déplacer lesdits pièges suivant au moins une première trajectoire fermée comprise dans un plan perpendiculaire à Z, et parcourue dans un sens par les atomes ultrafroids du premier piège et dans le sens opposé par les atomes ultrafroids du deuxième piège,

- le capteur comprenant en outre un système de détection d'intensité optique adapté à mesurer au moins une population de dits atomes ultrafroids dans un dit état interne.

Selon un mode de réalisation, lors de la séquence de séparation et de déplacement desdits pièges :

- au moins les guides selon X de la première paire la plus proche de l'axe X sont parcourus simultanément par des signaux microondes de pulsations ωa ou ωb, à certains instants dénommés premier ensemble d'instants,

- au moins un des guides selon Y' d'au moins la deuxième paire la plus proche de Y' est parcouru par un signal microonde formé de la superposition d'un signal microonde à une pulsation wa' et d'un signal microonde de pulsation ωb', à certains instants dénommés deuxième ensemble d'instants,

- le ou les fils conducteurs étant chacun traversé(s) d'un courant constant pendant la séparation, le déplacement et la recombinaison desdits pièges.

Selon un mode de réalisation les guides selon X des autres premières paires sont également successivement parcourus simultanément par des signaux micro-ondes de pulsations ωa ou ωb, à certains instants différents du premier ensemble d'instants.

Selon un mode de réalisation lors de la séquence de séparation et de déplacement desdits pièges :

- au moins les guides selon Y' de la deuxième paire la plus proche de l'axe Y' sont parcourus simultanément par des signaux microondes de pulsations ωa' ou ωb', à certains instants dénommés premier ensemble d'instants,

- au moins un des guides selon X d'au moins la première paire la plus proche de X est parcouru par un signal microonde formé de la superposition d'un signal microonde à une pulsation ωa et d'un signal microonde de pulsation ωb, à certains instants dénommés deuxième ensemble d'instants présentant des instants en commun avec le premier ensemble d'instants,

- le ou les fils conducteurs étant chacun traversé(s) d'un courant constant pendant la séparation, le déplacement et la recombinaison des dits pièges.

Selon un mode de réalisation les guides selon Y' des autres deuxièmes paires sont également successivement parcourus simultanément par des signaux microondes de pulsations wa' ou ωb', à certains instants différents du premier ensemble d'instants.

Selon un mode de réalisation le capteur permet en outre une mesure de vitesse de rotation selon les axes X et Y', et lesdits guides d'ondes et le ou les fils conducteurs sont en outre configurés,

- pour déplacer lesdits pièges suivant une deuxième trajectoire fermée comprise dans un plan perpendiculaire à X, lors de la mesure de la vitesse de rotation selon l'axe X,

- pour déplacer lesdits pièges suivant une troisième trajectoire fermée comprise dans un plan perpendiculaire à Y', lors de la mesure de la vitesse de rotation selon l'axe Y,

- lesdites trajectoires fermées étant parcourues dans un sens par les atomes ultrafroids du premier piège et dans le sens opposé par les atomes ultrafroids du deuxième piège, les deuxième et troisième trajectoires comprenant chacune au moins une première portion localisée à une première hauteur du plan XY et une deuxième portion localisée à une deuxième hauteur strictement supérieure à la première hauteur.

Selon un mode de réalisation du capteur selon l'invention lors de la mise en œuvre de la mesure de la vitesse de rotation selon l'axe X par génération de la deuxième trajectoire fermée,

- au moins les guides selon X de la première paire la plus proche de X sont parcourus simultanément par des signaux microondes de pulsations ωa ou ωb, à certains instants dénommé troisième ensemble d'instants,

- les guides selon Y' de la deuxième paire la plus proche de l'axe Y' sont simultanément parcourus par un signal microonde formé de la superposition d'un signal microonde à une pulsation wa' et d'un signal microonde de pulsation ωb' pour opérer un passage de la première hauteur à la deuxième hauteur, à certains instants dénommé quatrième ensemble d'instant présentant des instants en commun avec le troisième ensemble d'instants,

- le ou les fils conducteurs sont chacun traversé(s) d'un courant constant pendant la séparation, le déplacement et la recombinaison des dits pièges.

Selon un mode de réalisation du capteur selon l'invention les guides selon X des autres premières paires sont successivement parcourus simultanément par des signaux microondes de pulsations ωa ou ωb, à certains instants différents du troisième ensemble d'instants.

Selon un mode de réalisation du capteur selon l'invention, lors de la mise en œuvre de la mesure de la vitesse de rotation selon l'axe Y' par génération de la troisième trajectoire fermée,

- au moins les guides selon Y' de la deuxième paire la plus proche de l'axe Y' sont parcourus simultanément par des signaux microondes de pulsations ωa' ou ωb', à certains instants dénommé troisième ensemble d'instants,

- les guides d'ondes selon X de la première paire la plus proche de X sont simultanément parcourus par un signal microonde formé de la superposition d'un signal microonde à une pulsation ωa et d'un signal microonde de pulsation ωb pour opérer un passage de la première hauteur à la deuxième hauteur, à certains instants dénommé quatrième ensemble d'instant présentant des instants en commun avec le troisième ensemble d'instants,

- le ou les fils conducteurs sont chacun traversé(s) d'un courant constant pendant la séparation, le déplacement et la recombinaison des dits pièges.

Selon un mode de réalisation les guides selon Y' des autres deuxièmes paires sont successivement parcourus simultanément par des signaux microondes de pulsations wa' ou ωb', à certains instants différents du troisième ensemble d'instants.

Selon un autre aspect l'invention concerne une puce atomique matricielle comprenant :

- un premier ensemble de N premiers fils conducteurs indicés n et un deuxième ensemble de M deuxième fils conducteurs indicés m perpendiculaires entre eux et formant respectivement des N lignes et des M colonnes d'une matrice,

chacun des premiers fils conducteurs indicés n et des deuxième fils conducteurs indicés m étant confondus respectivement avec un axe Xn indicé n et un axe Ym indicé m, les premières paires de guides selon Xn étant ainsi communes à tous les pixels de la ligne n et les deuxième paires de guides selon Ym étant ainsi communes à tous les pixels de la colonne m, chaque pixel de la matrice formant une puce élémentaire.

Selon un mode de réalisation de la puce matricielle, elle comprend :

- un premier ensemble de N premiers fils conducteurs indicés n et un deuxième ensemble de M deuxième fils conducteurs indicés m perpendiculaires entre eux et formant respectivement des N lignes et des M colonnes d'une matrice,

  on définit des axes Xk indicés k selon des premières diagonales (Dk) de la matrice et des axes YI indicés I selon des deuxièmes diagonales (D'I) perpendiculaires aux première diagonales,

  la puce matricielle comprenant également des premières paires de guides d'onde selon chaque axe Xk et des deuxièmes paires de guides d'onde selon chaque axe YI, chaque pixel de la matrice formant une puce élémentaire (Ach(n,m)).

L'invention concerne également un capteur à atomes ultrafroids comprenant :

- une puce atomique matricielle selon l'invention,

- une source d'atomes agencée pour générer un nuage d'atomes ultrafroids près dudit plan XY de ladite puce atomique,

- un générateur d'un champ magnétique homogène,

- au moins un processeur, au moins un générateur de tension ou de courant continu adapté à commander des courants électriques dans lesdits fils conducteurs et au moins un générateur de tension ou de courant micro-ondes (GMW) connecté audits guides d'ondes,

- un système de détection d'intensité optique,

le capteur étant adapté pour mesurer, selon les besoins et de manière reconfigurable, au moins une accélération et/ou une vitesse de rotation selon une direction correspondant à celle des axes Xn ou Xk, et/ou des axes Ym ou YI, et/ou une vitesse de rotation selon l'axe Z, à partir desdites puces élémentaires.

Selon un dernier aspect l'invention concerne un procédé de mesure d'une vitesse de rotation autour d'au moins un axe dénommé axe de mesure, par un capteur à atomes ultrafroids comprenant une puce atomique, ladite puce atomique étant placée dans une enceinte à vide et comportant un plan de mesure XY repéré par un axe X et un axe Y orthogonaux, ledit plan de mesure étant normal à un axe Z, la puce atomique comprenant :

- une pluralité de première paires de guides d'ondes, une première paire étant constituée d'un premier et un deuxième guide d'ondes coplanaires, parallèles entre eux et disposés symétriquement de part et d'autre d'un axe dont la projection dans le plan XY est selon l'axe X, dénommées paires de guides selon X,

- une pluralité de deuxième paires de guides d'ondes, une deuxième paire étant constituée d'un premier et un deuxième guide d'ondes coplanaires parallèles entre eux et disposés symétriquement de part et d'autre d'un axe dont la projection dans le plan XY est selon un axe Y' différend de l'axe X, dénommées paires de guides selon Y',

    les paires de guides selon X étant isolés électriquement des paires de guides selon Y',

    les projections dans le plan XY de la première paire la plus éloignée de X et de la deuxième paire la plus éloignée de Y' formant à leur intersection un parallélogramme de centre O,

- un premier fil conducteur présentant une projection dans le plan XY selon X ou Y' ou une diagonale dudit parallélogramme, le premier fil conducteur étant adapté à être traversés par un courant continu,

- ledit premier fil présentant un évasement de manière à prendre la forme d'une surface dont la projection dans le plan XY englobe ledit parallélogramme et présente une symétrie par rapport au point O.

le procédé comprenant les étapes consistant à :

    **A** Générer un nuage de dits atomes ultrafroids, incluant des phases d'émission desdits atomes, de refroidissement desdits atomes, d'initialisation desdits atomes dans au moins un état interne |a> et de piégeage d'un nuage de dits atomes ultrafroids dans un minimum local de potentiel,

    **B** Initialiser les états internes en superposant de manière cohérente lesdits atomes ultrafroids entre ledit état |a> et un état interne |b> différent de |a> par une première impulsion $\pi / 2$ ;

**C** Séparer spatialement un nuage de dits atomes de dit état interne |a> dans un piège d'un nuage de dits atomes de dit état interne |b> dans un autre piège, et déplacer lesdits pièges en sens opposé suivant une trajectoire fermée contenue dans un plan perpendiculaire à l'axe de mesure et initialisée à partir du point O:

- en appliquant une tension ou un courant à fréquences micro-ondes prédéterminées auxdits guides d'ondes selon une séquence prédéterminée,

- et en appliquant une valeur constante de tension ou de courant continu au premier et le cas échéant au deuxième fil(s) conducteur(s),

**D** Recombiner lesdits états internes |a> et |b> en appliquant auxdits atomes ultrafroids une deuxième impulsion $\pi / 2$ puis mesurer la densité d'atomes dans un état interne choisi parmi au moins |a> et |b>;

**E** Déterminer la phase Sagnac desdits atomes ultrafroids et calculer la vitesse de rotation dudit capteur selon ledit axe de mesure.

Selon un mode de réalisation, pour la mesure d'une vitesse de rotation autour de l'axe Z, pendant l'étape **C** ladite séquence inclut l'application à certains instants d'un signal microonde formé de la superposition d'un signal microonde à une pulsation $\omega a$ et d'un signal microonde de pulsation $\omega b$, à au moins un des guides selon X d'au moins la première paire la plus proche de l'axe X, ou l'application d'un signal microonde formé de la superposition d'un signal microonde à une pulsation wa' et d'un signal microonde de pulsation $\omega b'$, à au moins un des guides selon Y' d'au moins la deuxième paire la plus proche de l'axe Y'.

Selon un mode de réalisation pour la mesure d'une vitesse de rotation autour de l'axe X ou de l'axe Y', pendant l'étape **C** ladite séquence inclut :

- pour la mesure de la vitesse de rotation autour de l'axe X, l'application à certains instants d'un signal microonde formé de la superposition d'un signal microonde à une pulsation $\omega a$ et d'un signal microonde de pulsation $\omega b$, simultanément aux deux guides selon X de la première paire la plus proche de l'axe X,

- pour la mesure de la vitesse de rotation autour de l'axe Y', l'application à certains instants d'un signal microonde formé de la superposition d'un signal microonde à une pulsation $\omega a'$ et d'un signal micro-

onde de pulsation ωb', simultanément aux deux guides selon Y' de la deuxième paire la plus proche de l'axe Y'.

Selon un mode de réalisation, la puce atomique comprenant en outre un premier et un fils de chargement, conducteurs et isolés électriquement du premier fil, et le cas échéant du deuxième, fil(s) conducteur(s), dont les projections dans le plan XY sont sécantes en O, à l'étape A, le piégeage du nuage d'atomes ultrafroids au voisinage de la puce atomique s'effectue avec lesdits fils de chargement.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

La figure 1 déjà citée illustre un exemple de topologie des fils conducteurs et des guides microondes et de trajectoire des deux nuages d'atomes.

La figure 2 déjà citée illustre la géométrie des guides et fils de la puce atomique ainsi que les pièges T1 et T2.

La figure 3 déjà citée illustre le principe de génération de la trajectoire des nuages d'atomes sur la puce atomique.

La figure 4a illustre une puce atomique Ach pour capteur à atomes ultrafroids selon l'invention avec un fil W1 selon la diagonale D1.

La figure 4b illustre une puce atomique Ach pour capteur à atomes ultrafroids selon l'invention avec un fil W1 selon l'axe X.

La figure 5 illustre la trajectoire de déplacement des deux nuages d'atomes pour une mesure de vitesse de rotation selon l'axe X, la trajectoire étant située dans un plan perpendiculaire à X, selon le document FR2004743.

La figure 6 décrit la séquence de déplacement des nuages atomiques pour l'obtention de la trajectoire de la figure 5.

La figure 7 illustre le chronogramme qui décrit les intensités IW10 et IW20 appliquées respectivement à W10 et W20, les puissances et les fréquences appliquées à CPWX1 et CPWX2, en fonction du temps pour l'obtention du déplacement de la figure 6.

La figure 8a illustre une première variante de puce atomique selon l'invention dans laquelle le premier et le deuxième fils sont orientés respectivement selon X et Y'.

La figure 8b illustre une deuxième variante de puce atomique selon l'invention dans laquelle le premier et le deuxième fils sont orientés respectivement selon la première diagonale D1 et selon la deuxième diagonale D2 du parallélogramme P.

La figure 9 illustre un mode de réalisation de la puce atomique dans lequel l'axe Y' est confondu avec l'axe Y.

La figure 10 illustre un mode de réalisation la puce atomique selon l'invention dans lequel la puce comprend également un premier fil conducteur, dit de chargement, et un deuxième fil conducteur de chargement, isolés électriquement du ou des fils conducteurs W1 et W2.

La figure 11 illustre un mode de réalisation particulier dans lequel les projections des fils de chargement coïncident avec les projections des fils conducteurs en dehors de la surface S, pour le cas W1 et W2 selon les deux diagonales D1 et D2 du parallélogramme P.

La figure 12 illustre un mode de réalisation particulier dans lequel les projections des fils de chargement coïncident avec les projections des fils conducteurs en dehors de la surface S, pour le cas W1 selon X et W2 selon Y (cas Y'=Y).

La figure 13 illustre une coupe de la puce atomique selon un mode de réalisation dans lequel les fils de chargement W1C et W2C occupent le niveau de la puce le plus éloigné du plan de mesure, les composants étant enfouis dans un même substrat.

La figure 14 illustre un mode de réalisation de la puce selon l'invention dans lequel la surface d'évasement S est un carré, la partie gauche correspondant à W1/W1C selon X et W2/W2C selon Y et la partie droite correspondant à W1/W1C selon D1 et W2/W2C selon D2.

La figure 15 illustre un mode de réalisation de la puce selon l'invention dans lequel la surface d'évasement S est un cercle, la partie gauche correspondant à W1/W1C selon X et W2/W2C selon Y et la partie droite correspondant à W1/W1C selon D1 et W2/W2C selon D2.

La figure 16 illustre un premier mode de réalisation d'une trajectoire TZ par déplacement des deux nuages piégés, le déplacement étant illustré à différents instants t0 à t12 de la séquence temporelle d'adressage.

La figure 17 illustre les signaux appliqués aux guides d'onde en fonction du temps.

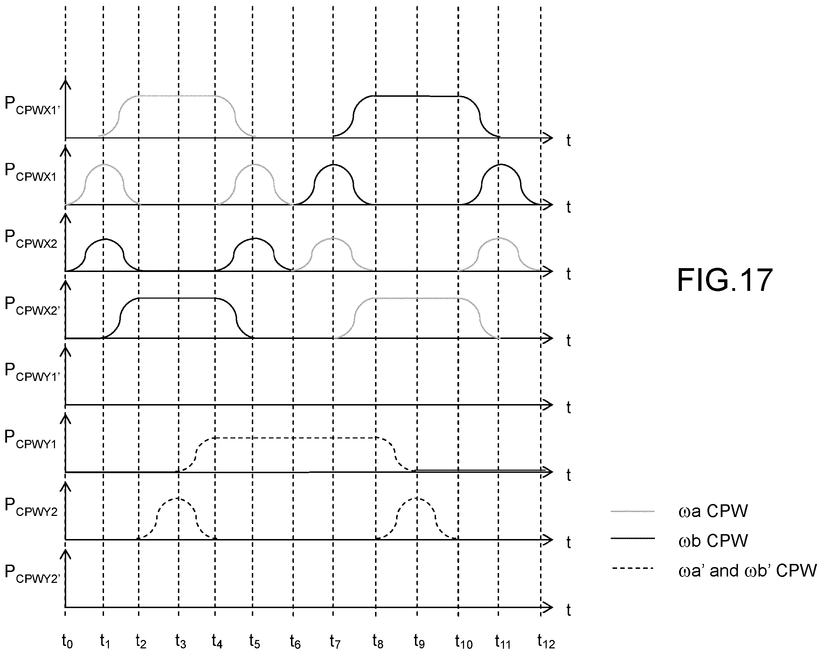

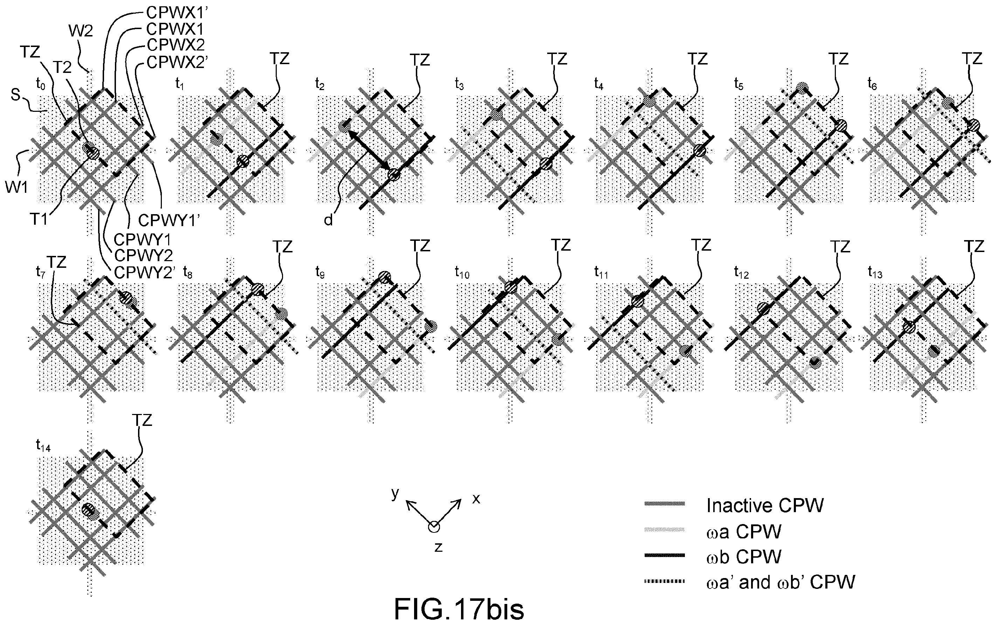

La figure 17bis illustre une variante de réalisation d'une trajectoire TZ dans laquelle on allume également avec un signal somme le guide CPWY1' (et donc simultanément on diminue la puissance appliquée à CPWY1).

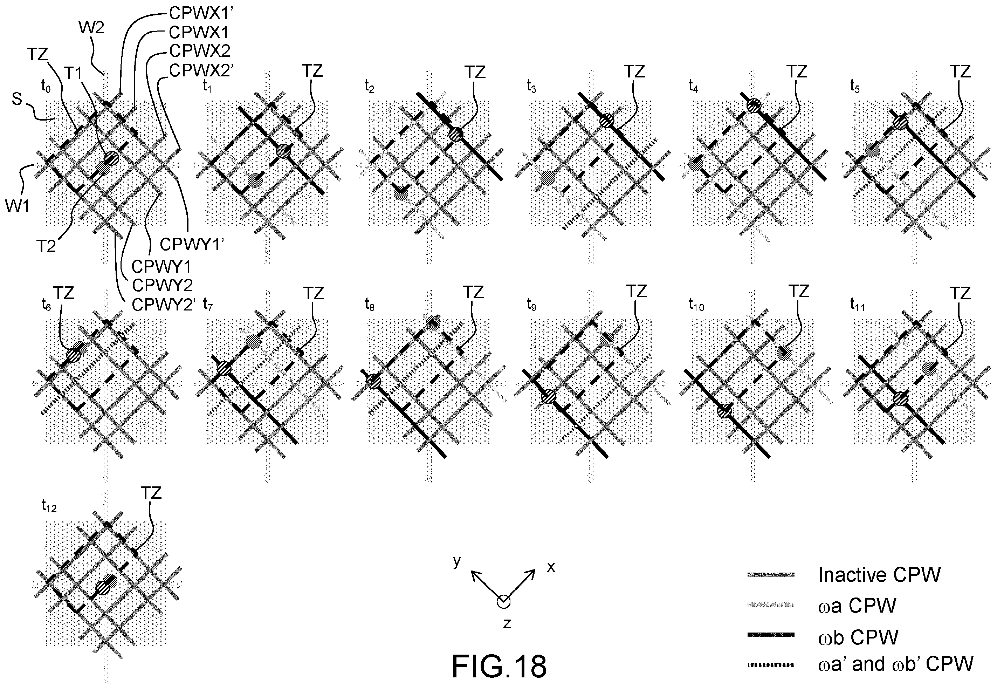

La figure 18 illustre un deuxième mode de réalisation d'une trajectoire TZ par déplacement des deux nuages piégés, le déplacement étant illustré à différents instants t0 à t12 de la séquence temporelle d'adressage.

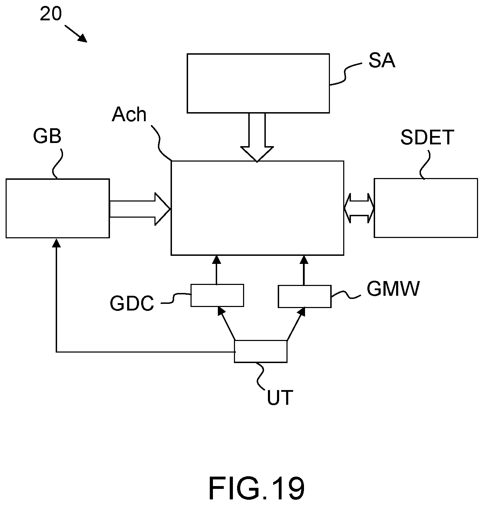

La figure 19 illustre un capteur à atomes ultrafroids selon l'invention permettant une mesure de vitesse de rotation selon au moins l'axe Z.

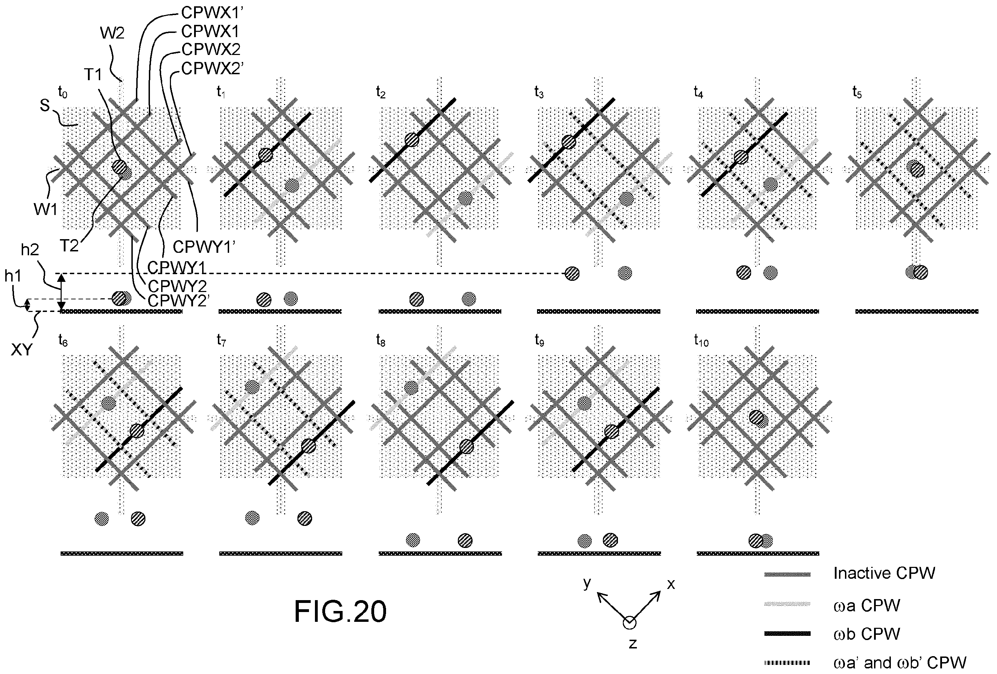

La figure 20 illustre un exemple de réalisation d'une trajectoire TX pour la mesure d'une vitesse de rotation autour de l'axe X.

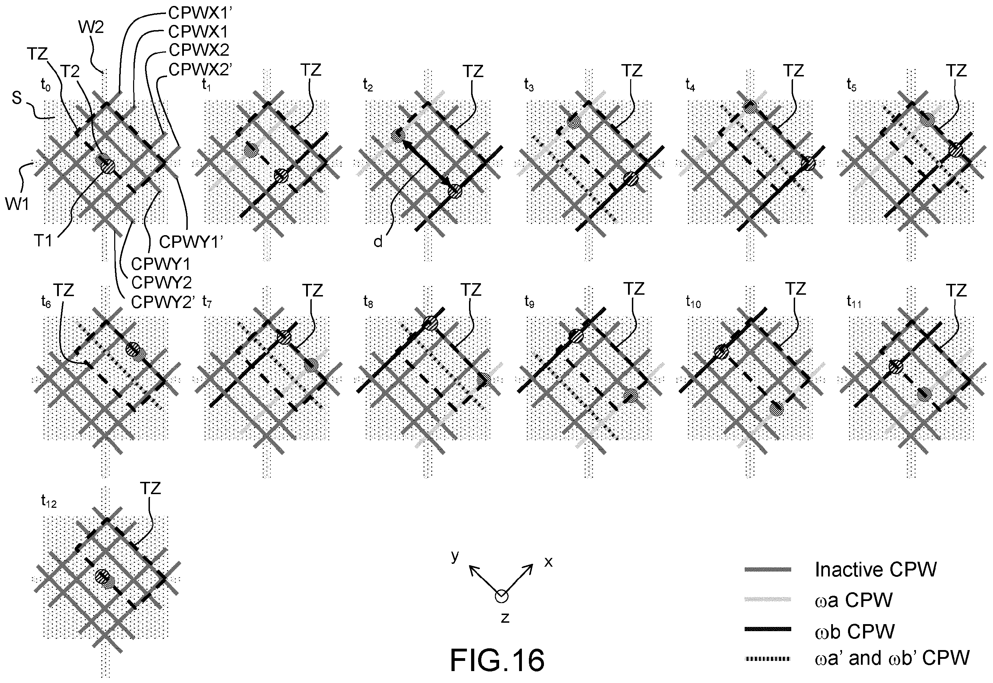

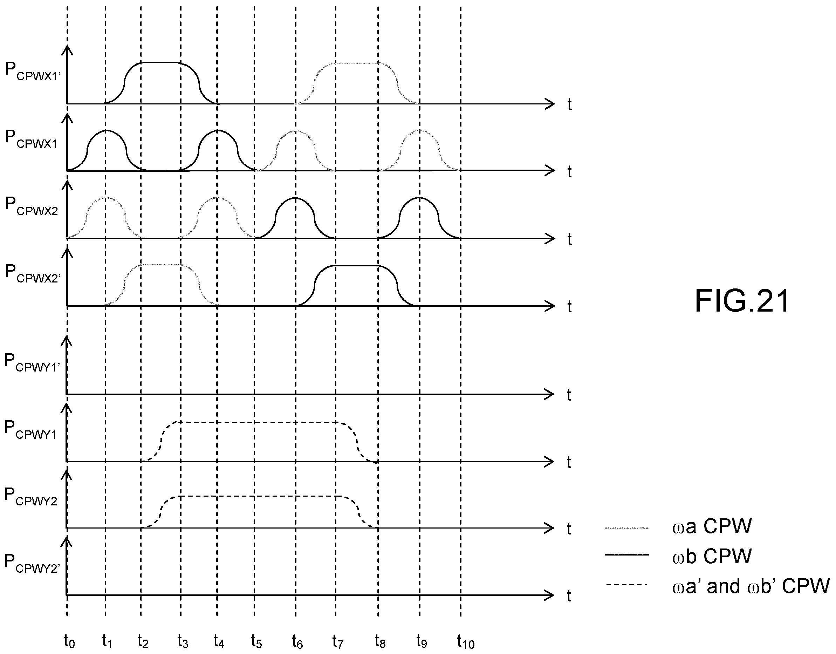

La figure 21 illustre les puissances microonde appliquées aux guides pour décrire la trajectoire de la figure 20, en reprenant la géométrie de puce de la figure 16.

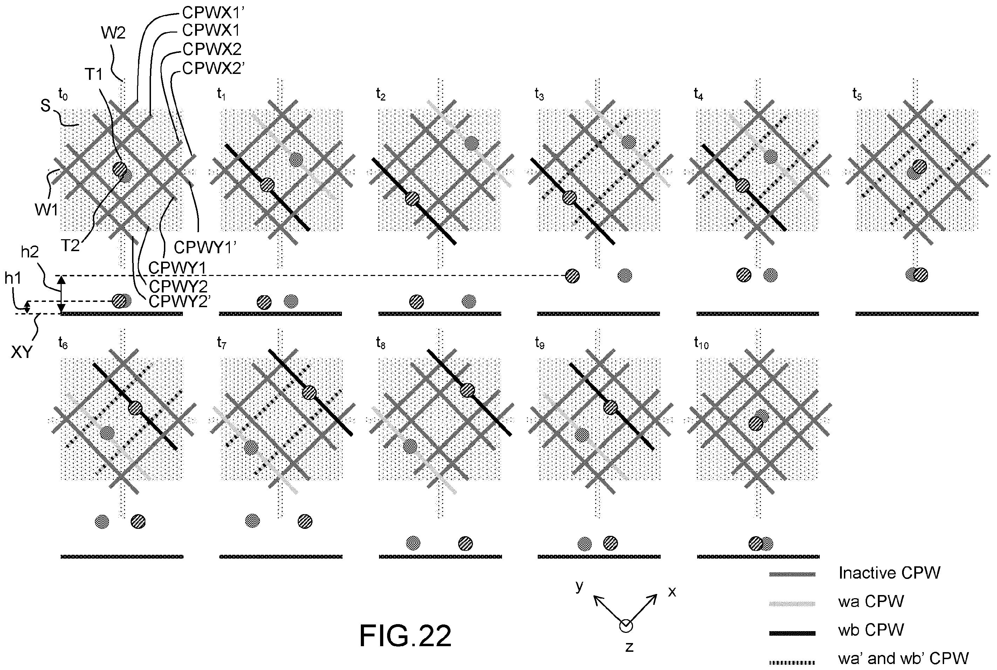

La figure 22 illustre la réalisation d'une trajectoire TY en reprenant la géométrie de puce de la figure 16 et selon le même esprit que pour TX.

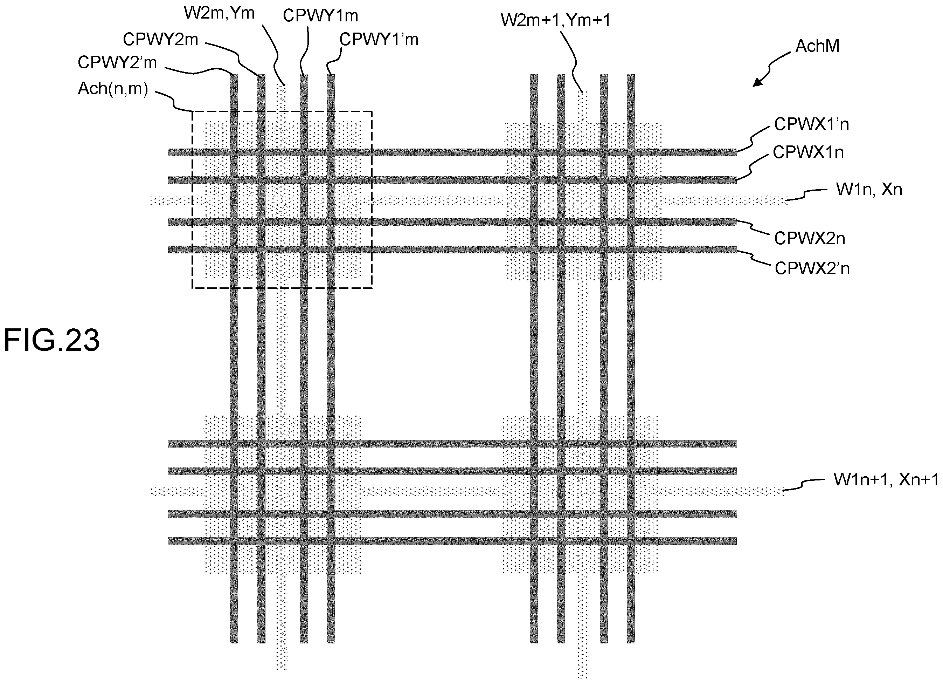

La figure 23 illustre une première variante d'une puce atomique matricielle selon l'invention.

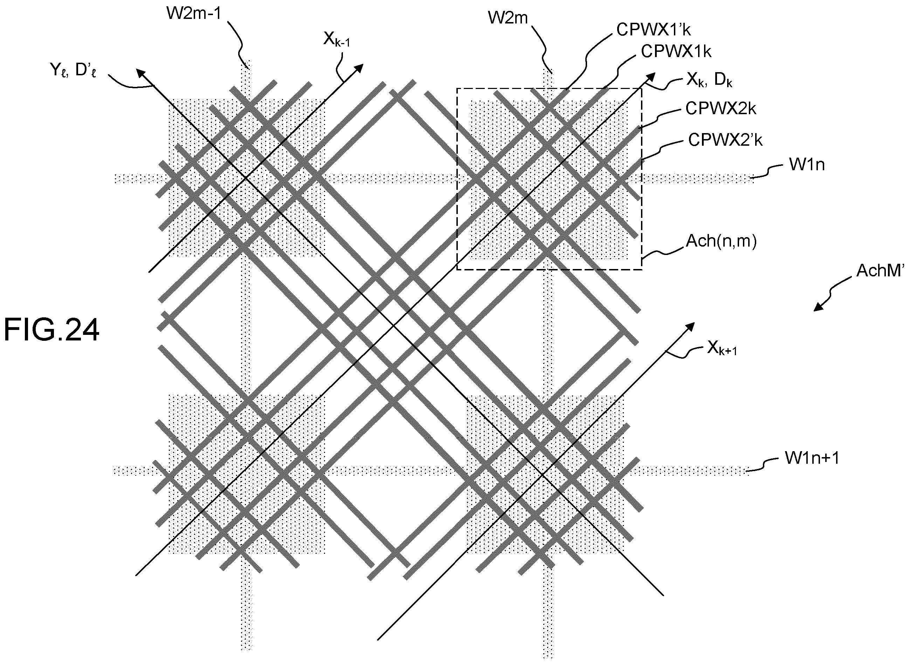

La figure 24 illustre une deuxième variante d'une puce atomique matricielle selon l'invention.

## DESCRIPTION DETAILLEE DE L'INVENTION

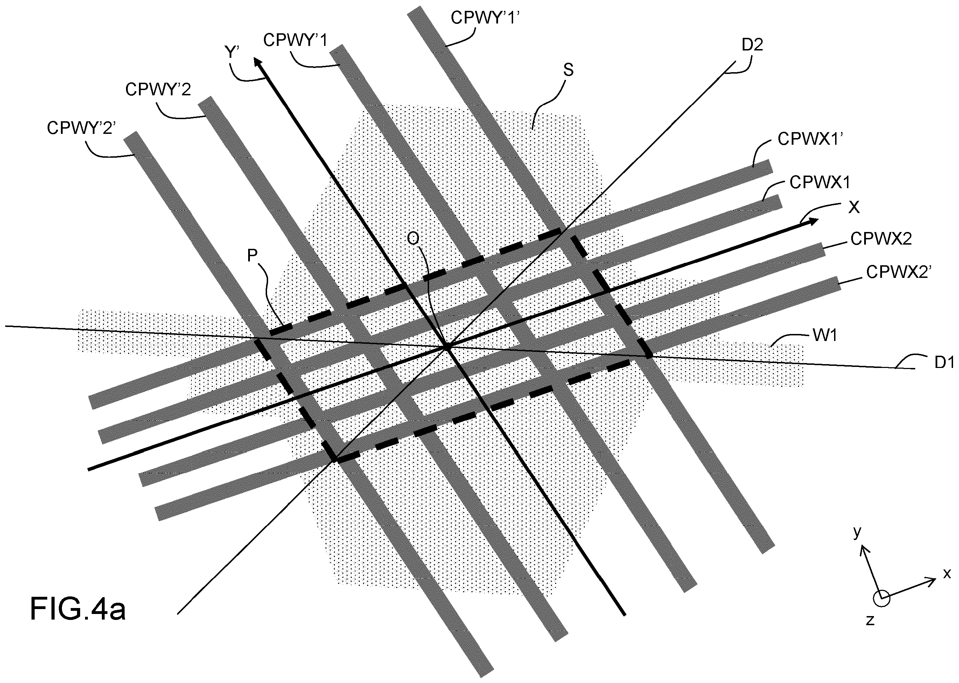

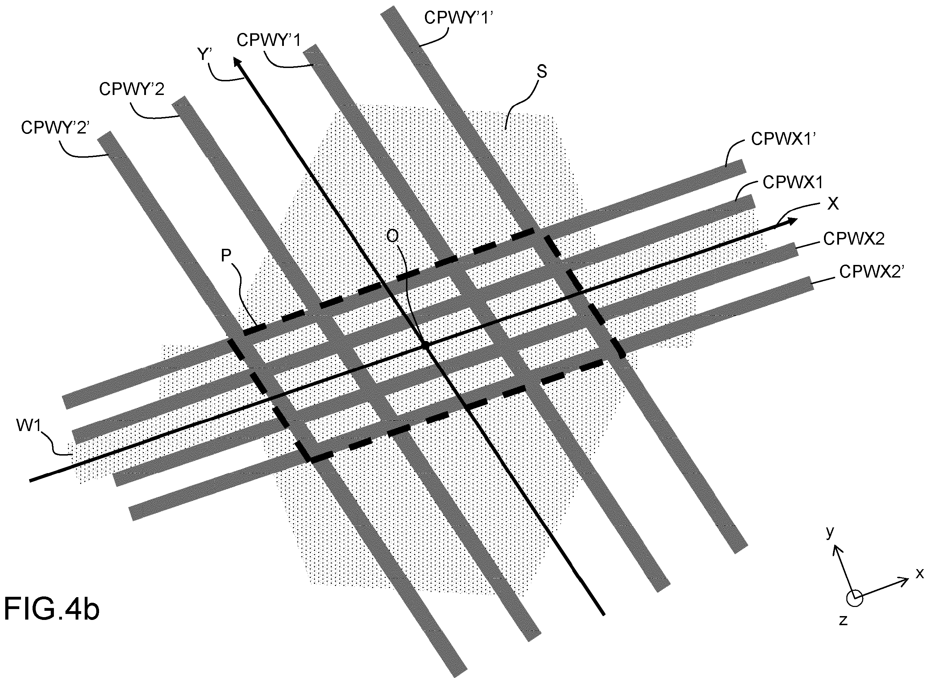

Selon un premier aspect l'invention concerne une puce atomique Ach pour capteur à atomes ultrafroids telle qu'illustrée figures 4a et 4b. La surface de la puce défini un plan XY dénommé plan de mesure repéré par un axe X et un axe Y perpendiculaires entre eux, le plan XY étant normal à un axe Z. Les axes XYZ définissent un repère orthonormé.

La puce atomique Ach comprend une pluralité de première paires de guides d'ondes, une première paire étant constituée d'un premier guide d'onde CPWX1, CPWX1' et d'un deuxième guide d'onde CPWX2, CPWX2' coplanaires, parallèles entre eux et disposés symétriquement de part et d'autre d'un axe dont la projection dans le plan XY est selon l'axe X, dénommées paires de guides selon X. Sur les figures 4a et 4b la paire de guides la plus proche de X est (CPWX1, CPWX2) et la paire suivante est (CPWX1', CPWX2').

La puce atomique comprend également une pluralité de deuxième paires de guides d'ondes, une deuxième paire étant constituée d'un premier guide d'onde CPWY'1, CPWY'1' et un deuxième guide d'onde CPWY'2, CPWY'2' coplanaires parallèles entre eux et disposés symétriquement de part et d'autre d'un axe dont la projection dans le plan XY est selon un axe Y' différent de l'axe X, dénommées paires de guides selon Y'. Sur les figures 4a et 4b la paire de guides la plus proche de Y' est (CPWY'1, CPWY'2) et la paire suivante est (CPWY'1', CPWY'2').

Les guides selon X sont isolés électriquement des guides selon Y'. Préférentiellement ils sont disposés sur un niveau différent de la puce. Dans l'hypothèse non limitative selon laquelle les guides selon X occupent le niveau correspondant au plan de mesure XY, la projection de l'axe X dans le plan XY correspond à cet axe X, alors que l'axe de symétrie des deux guides d'onde CPWY'1 et CPWY'2 se trouve dans le plan d'un autre niveau. Ainsi c'est bien la projection de cet axe de symétrie dans le plan XY, dénommé Y', qui est situé dans le plan XY. L'axe Y' est différent de X, l'angle entre X et Y' est supérieur ou égal à 30° et inférieur ou égale à 150°. Les projections dans le plan XY de la première paire la plus éloignée de X et de la deuxième paire la plus éloignée de Y' forment à leur intersection un parallélogramme P de centre O.

La puce comprend également un premier fil conducteur W1 présentant une projection dans le plan XY selon X ou Y' ou selon une diagonale D1 ou D2 du parallélogramme P.

La figure 4a illustre l'exemple d'un fil W1 selon D1 et la figure 4b illustre l'exemple d'un fil selon X. Le premier fil W1 présente un évasement de manière à prendre la forme d'une surface S dont la projection dans le plan XY englobe le parallélogramme P et présente une symétrie par rapport au point O. On entend par englober le fait que la surface du parallélogramme P est incluse dans la surface S. Une symétrie de centre O signifie que l'angle de la symétrie est 180°. La symétrie de la surface S par rapport à O est dictée par des considérations de symétrie pour la génération des minimas de potentiel pour les pièges à atomes. En effet les pièges habillés T1 et T2 doivent être symétrique suivant les axes X et Y'.

Le premier fil conducteur est adapté à être traversés par un courant continu. Le fil W1 est de section non constante dans la zone au voisinage du centre du piège O, et la surface S est assimilée à un plan dit « plan » DC car le fil W1 est parcouru d'un courant continu lors de la mesure réalisée par le capteur. La surface S englobe le parallélogramme P pour que le plan DC couvre toute la surface de déplacement des nuages d'atomes lors de la mesure. Les avantages de cette géométrie sont expliqués plus loin.

Le fil W1 est isolé électriquement des guides d'ondes et préférentiellement il occupe un niveau différent de la puce, niveau préférentiellement inférieur aux niveaux occupés par les guides selon X et selon Y'. Les différents niveaux forment un empilement disposé sur un substrat. La puce atomique selon l'invention comprend ainsi un substrat et l'empilement. Selon un premier exemple les guides et le fil sont successivement déposés sur le substrat et séparés par des couches isolantes le cas échéant. Selon un deuxième exemple le substrat est gravé, un des éléments est inséré, puis un matériau identique à celui du substrat est déposé puis gravé et ainsi de suite. Dans ce dernier cas les différents éléments sont donc intégrés dans un même matériau.

Pour plus de clarté dans les prochaines figures les guides et le fil sont représentés dans le plan XY.

Les guides d'onde et le fil conducteurs sont de nature similaire à ceux décrits dans le document WO2017089489. Typiquement le fil et les guides sont en or ou en cuivre, isolés par une couche d'un matériau choisi parmi AIN, $SiO_2$, $Si_3N_4$, les couches étant déposées sur un substrat Sub en AIN, ou en silicium, ou en $SiO_2$, ou en SiC.

La puce atomique Ach selon l'invention diffère de la puce décrite dans le document WO2017089489 d'une part par la présence de 8 guides d'onde (au lieu de deux), par le nombre de fils (seulement un seul) et par la forme évasée de ce fil au voisinage du centre du piège.

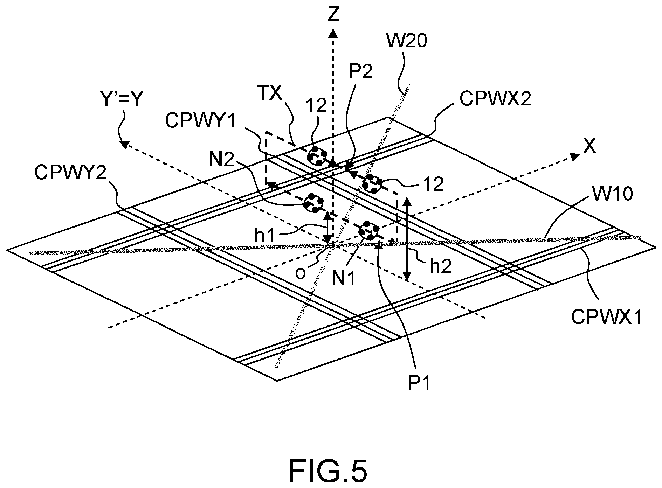

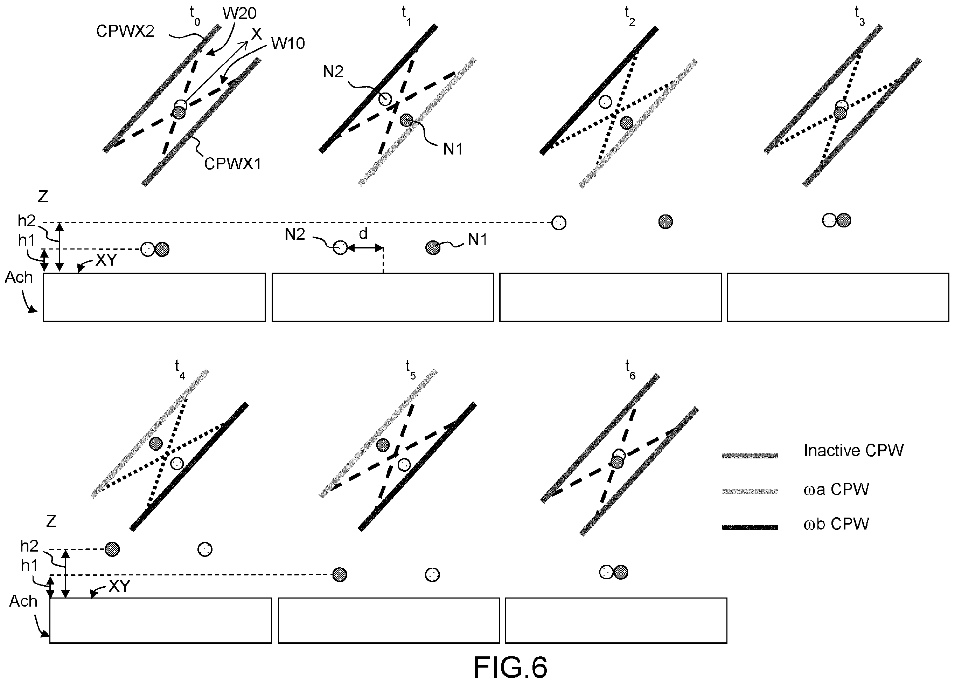

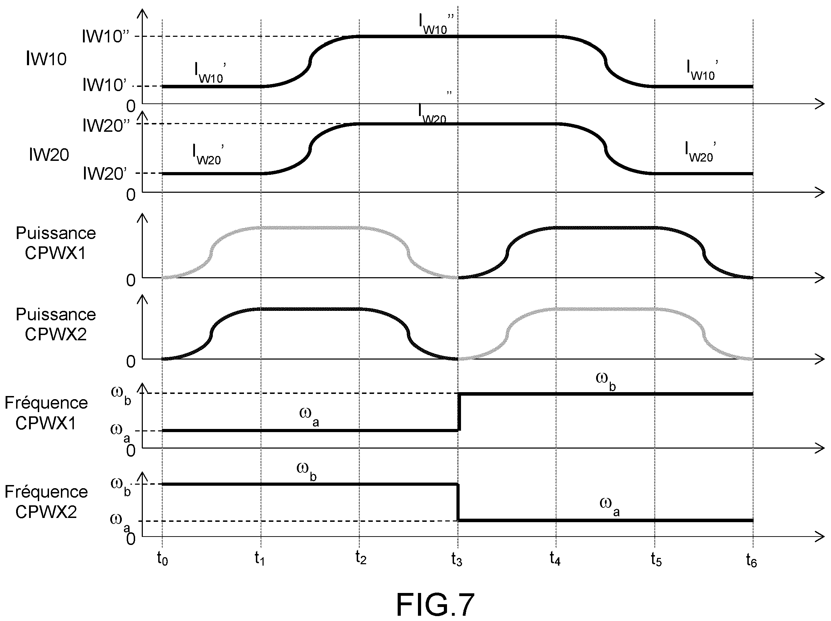

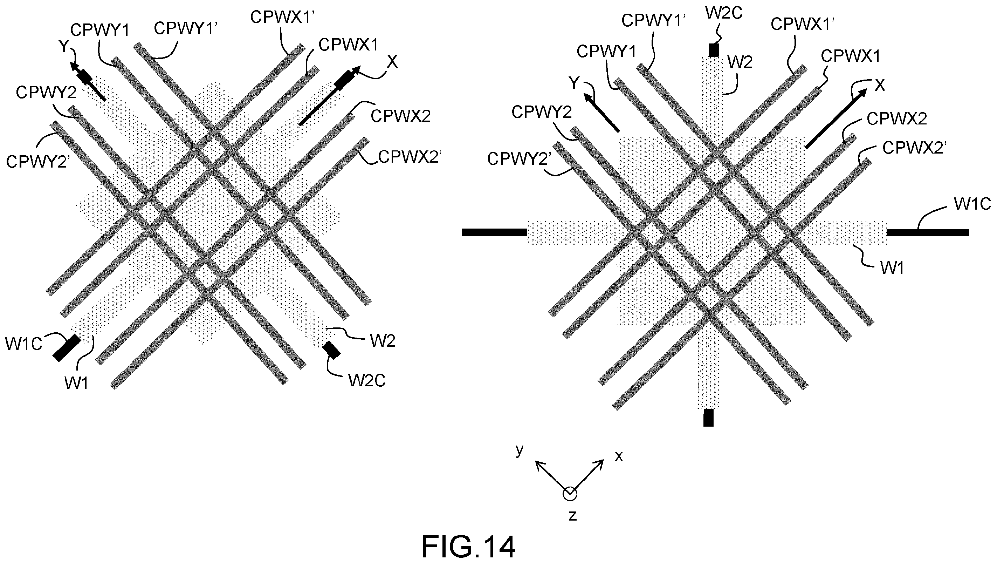

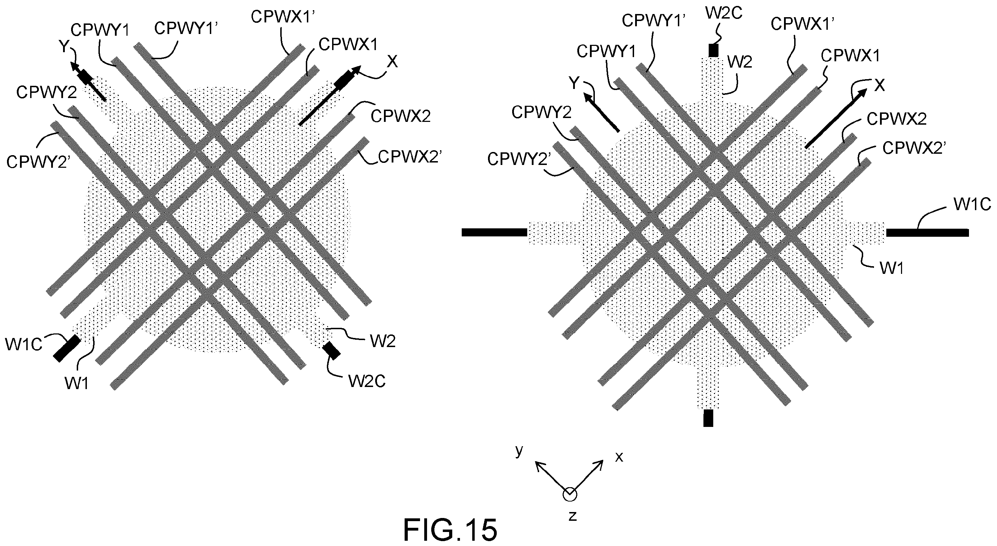

Dans le document FR2004743 la géométrie à deux fils conducteurs, lorsque la puce est intégrée à un capteur inertiel, permet de réaliser deux trajectoires fermées TX et TY' destinées à être parcourues par les deux nuages N1 et N2 d'atomes froids 12, ces trajectoires étant comprises non pas dans un plan parallèle au plan XY comme dans le document WO2017089489, mais dans deux plans perpendiculaires à XY ou verticaux : le plan YZ perpendiculaire à X pour TX, tel qu'illustré figure 5, et le plan XZ perpendiculaire à Y' pour TY'. La figure 6 décrit la séquence de déplacement des nuages atomiques pour l'obtention de la trajectoire TX. Une teinte gris clair du guide correspond à l'application d'une pulsation ωa à ce guide, une teinte gris foncé à l'application d'une pulsation ωb, la teinte gris intermédiaire correspondant à un guide inactif auquel aucun signal n'est appliqué. Les traits en pointillé long signifient que l'on applique aux fils W10 et W20 des niveaux bas d'intensité continue, respectivement Iw10' et Iw20', tandis que des traits pointillés-points signifient que l'on applique à W10 et W20 des niveaux haut d'intensité continue, respectivement Iw10" et Iw20". La séparation des deux nuages s'effectue par application de ωa à CPWX1 et ωb à CPWX2, tandis que le changement de hauteur, de h1 à h2, s'effectue par passage, dans les fils conducteurs, du niveau bas au niveau haut d'intensité. Ceci est illustré sur le chronogramme de la figure 7, qui décrit les intensités IW10 et IW20 appliquées respectivement à W10 et W20, les puissances et les fréquences appliquées à CPWX1 et CPWX2, en fonction du temps. Ainsi dans le document FR2004743 le passage de h1 à h2 pour la réalisation des trajectoires « verticales » TX et TY' est réalisé par application aux deux fils de signaux continus à deux paliers. Dans ce document la mesure selon Z avec la trajectoire « horizontale » (dans le plan XY) est réalisée avec une pluralité de fils conducteurs, en déplaçant les nuages par déplacement du minimum de champ magnétique, obtenu par allumage successifs de différents points de croisement entre les fils, comme illustré figures 14 et 15 de ce document.

Les inventeurs ont mis au point une méthode d'adressage permettant aux nuages d'atomes 12 de décrire en sens inverse une trajectoire horizontale (parallèle au plan XY), dénommée première trajectoire TZ, sans nécessiter de fils additionnels. Avec la puce selon l'invention intégrée à un capteur inertiel une trajectoire horizontale est obtenue avec seulement un fil conducteur, et en appliquant des signaux microondes spécifiques selon une séquence temporelle d'interférométrie, le fil conducteur étant lui maintenu à une intensité constante. Pour la réalisation de la trajectoire TZ on met en œuvre une séquence d'interférométrie incluant l'application à un des guide d'ondes d'un signal microonde comprenant la superposition d'un signal à une première pulsation (wa ou wa') et d'un signal à une deuxième pulsation (ωb ou ωb'). Ce signal, proportionnel à Ea.cos(ωat)+Eb.cos(ωbt) (respectivement à Ea'.cos(wa't)+Eb'.cos(wb't)) est dénommé signal somme, et noté signal [a+b] ou signal [a'+b'] en fonction des pulsations qui le compose (voir plus loin).

Pour des questions de symétries du potentiel appliqué pour l'obtention des pièges atomiques, des modes de réalisation préférentiels sont décrits ci-dessous.

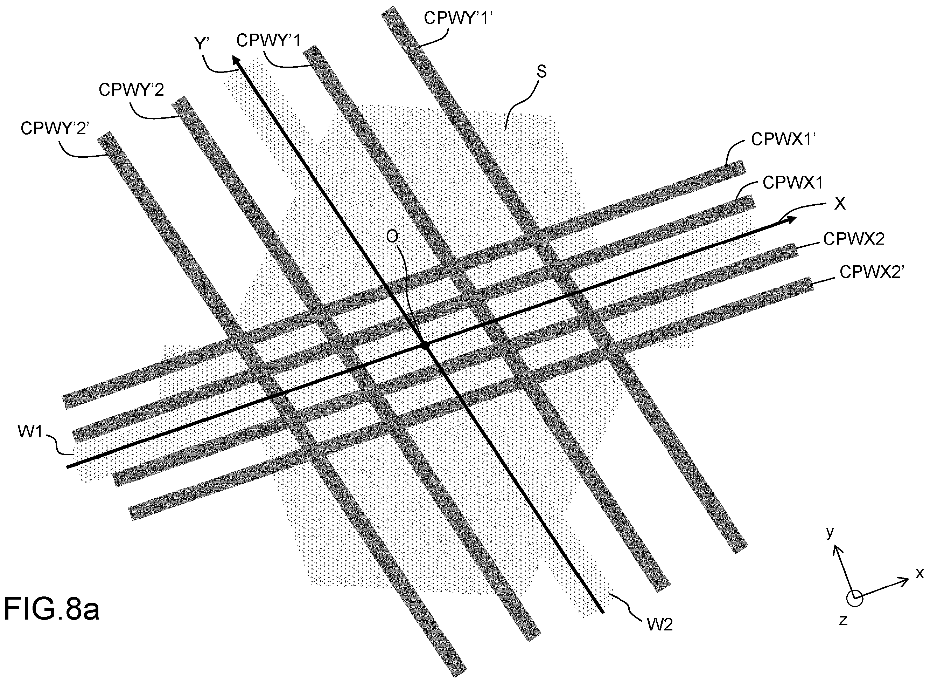

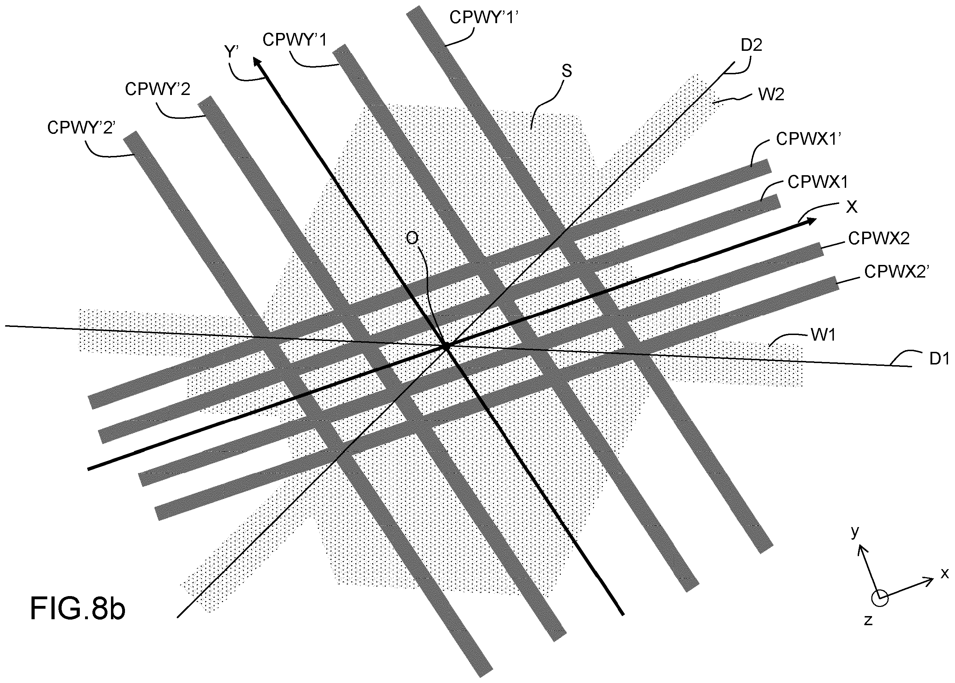

Selon un mode de réalisation la puce atomique comprend en outre un deuxième fil conducteur W2 coplanaire avec le premier fil conducteur W1. Selon une première variante le premier et le deuxième fils sont orientés respectivement selon X et Y' ou inversement tel qu'illustré figure 8a et selon une deuxième variante le premier et le deuxième fils sont orientés respectivement selon la première diagonale D1 et selon la deuxième diagonale D2 du parallélogramme P ou inversement tel qu'illustré figure 8b. Bien entendu dans ce cas la surface S est l'intersection de ces deux fils W1 et W2. Le deuxième fil est du même type que le premier et préférentiellement lors de la mesure on appliquera un même courant continu aux deux fils, mais ce n'est pas obligatoire.

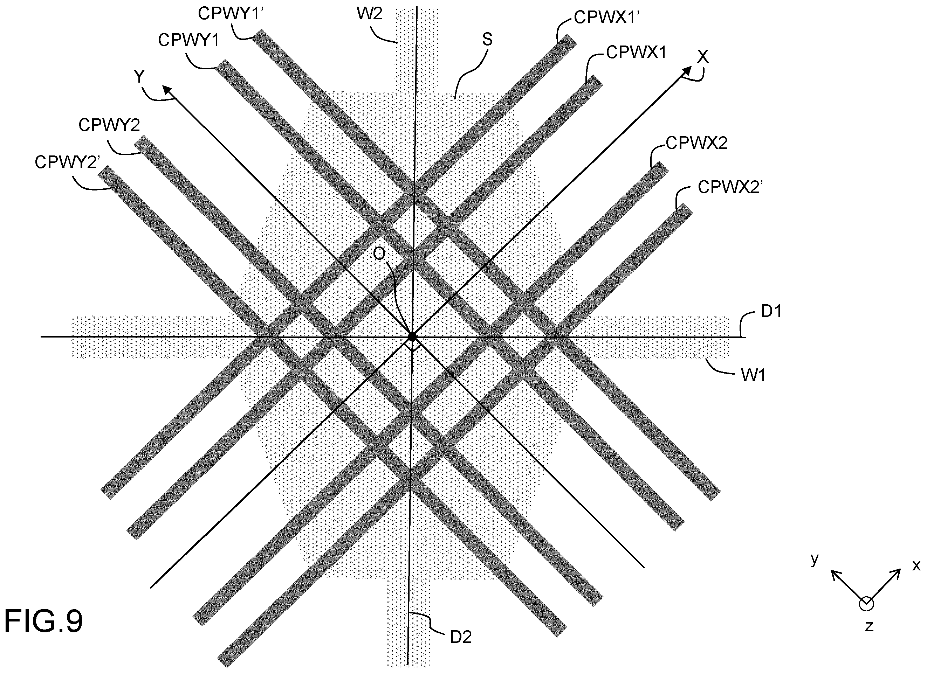

Préférentiellement, pour mesurer des vitesses et accélérations selon des axes perpendiculaires, l'axe Y' est confondu avec l'axe Y tel qu'illustré figure 9, pour le cas W1 et W2 selon D1 et D2. Le parallélogramme P devient ici un rectangle ou un carré.

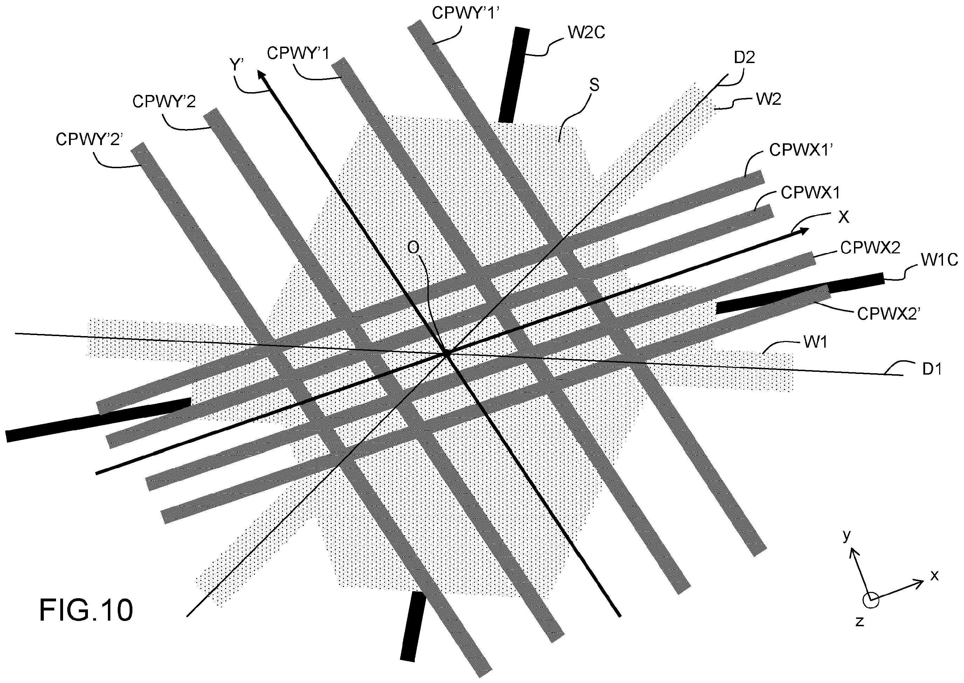

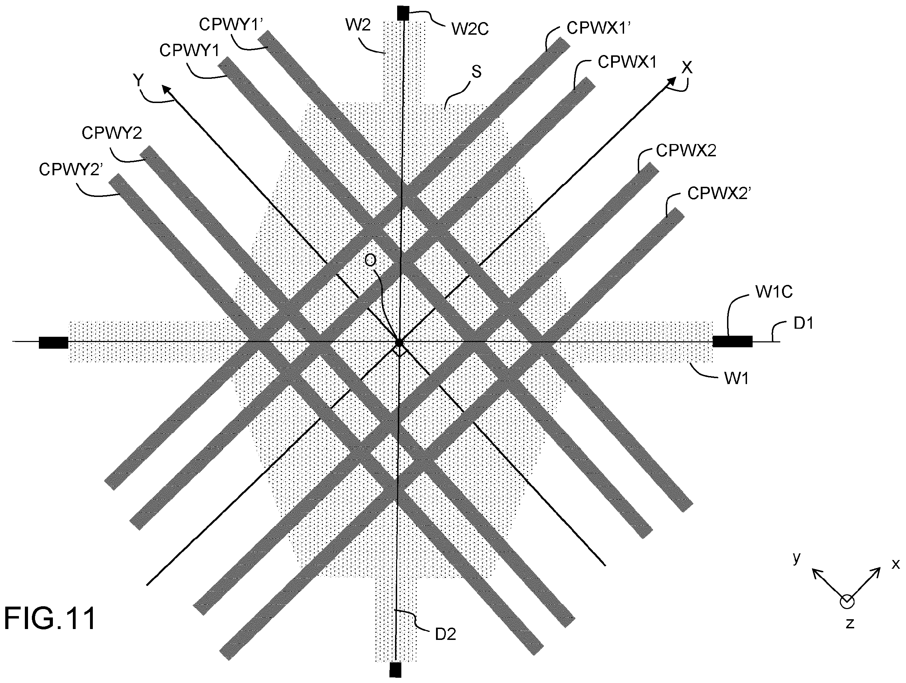

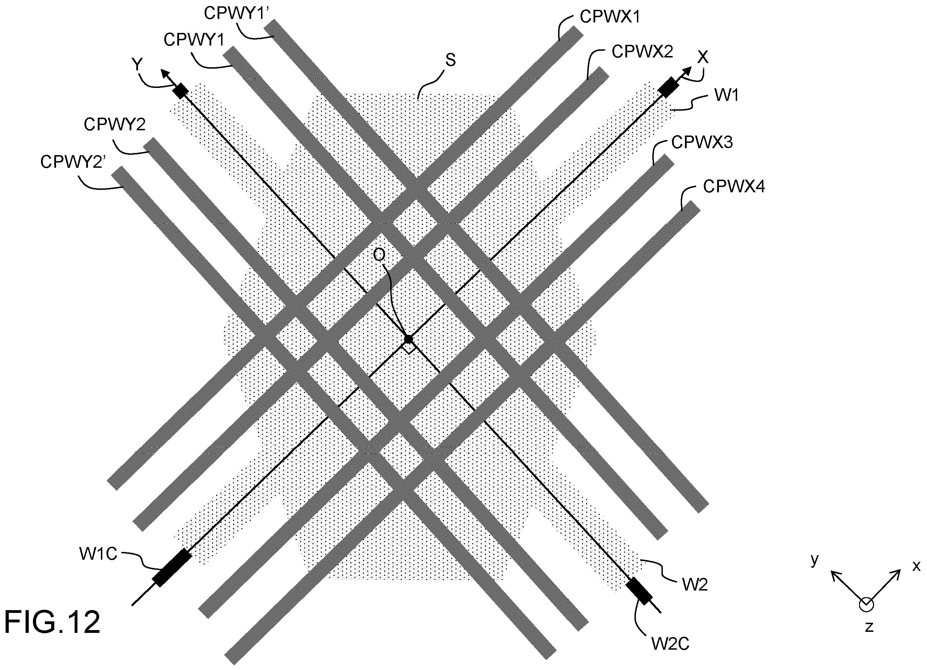

Selon un mode de réalisation la puce atomique comprend également un premier fil conducteur W1C dit de chargement et un deuxième fil conducteur W2C de chargement, isolés électriquement du ou des fils conducteurs W1 et W2, et dont les projections dans le plan XY sont sécantes en O, tel qu'illustré figure 10. Préférentiellement, toujours pour des considérations de symétrie et également de facilité de fabrication, les projections des fils de chargement coïncident avec les projections des fils conducteurs en dehors de la surface S, tel qu'illustré figure 11 pour le cas W1 et W2 selon D1 et D2 et figure 12 pour le cas W1 et W2 selon X et Y (cas Y'=Y).

La surface S du ou des fils W1 et W2 formant le plan DC permet d'obtenir des pièges atomiques « mou » ce qui signifie que la courbure du piège au voisinage du minimum de potentiel généré est faible. L'avantage est que les atomes sont moins attirés vers le plan de mesure et cela permet une séparation micro-onde sur une plus grande distance (voir plus loin). Mais cette plus faible attraction peut s'avérer insuffisante dans l'étape préliminaire de chargement, qui transfert le nuage d'atomes ultrafroids issus du MOT au voisinage de la puce. Les fils de chargement permettent alors de réaliser à leur intersection un piège « raide » de plus grande profondeur (courbure plus forte, plus forte attraction) pour piéger les atomes les plus chauds lors du chargement. Lors du chargement ces fils W1C et W2C sont parcourus de forts courants continus et donc préférentiellement ils seront disposés sur le niveau inférieur de la puce (le plus éloigné du plan de mesure) permettant une meilleure dissipation thermique permise par l'enfouissement. Les fils de chargement ne sont « allumés » que pendant l'étape de chargement, ils sont ensuite éteints et ne participent pas à la séquence de déplacement des nuages pour la réalisation d'une mesure.

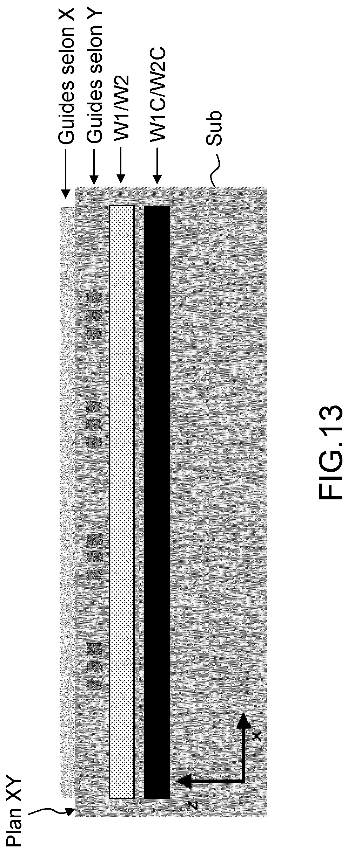

Comme expliqué plus haut préférentiellement les guides selon X, les guides selon Y', le ou les fils conducteurs W1 et W2, et les fils de chargement W1C et W2C occupent chacun un niveau différent de la puce. Préférentiellement les fils de chargement W1C et W2C occupent le niveau de la puce le plus éloigné du plan de mesure, tel qu'illustré figure 13, dans laquelle les composants sont enfouis dans un même substrat Sub. La figure 13 correspond à la vue en coupe dans le plan XZ de la géométrie de la figure 11. Les fils W1C et W2C peuvent également ne pas être sur le même niveau.

Dans la suite diverse exemples non limitatifs de mise en œuvre de la puce atomique Ach selon l'invention dans un capteur à atomes ultrafroids sont donnés avec l'axe Y' confondu avec l'axe Y et les fils W1 et W2 selon respectivement X et Y ou D1 et D2, et le cas échéant les fils W1C et W2C selon respectivement W1 et W2, mais il est entendu que ces exemples sont applicables à tout type de puce atomique selon l'invention.

Par exemple la surface S est choisie parmi : un ovale, un cercle, un polygone, un rectangle, un carré. La figure 14 illustre le cas d'un carré (à gauche W1/W1C selon X et W2/W2C selon Y et à droite W1/W1C selon D1 et W2/W2C selon D2) et la figure 15 illustre le cas d'un cercle (à gauche W1/W1C selon X et W2/W2C selon Y et à droite W1/W1C selon D1 et W2/W2C selon D2).

Dans la suite la convention des teintes de gris et des traits est : une teinte gris clair du guide correspond à l'application d'une pulsation ωa ou wa' à ce guide, une teinte gris foncé à l'application d'une pulsation ωb ou ωb', une teinte de gris intermédiaire à un guide inactif auquel aucun signal n'est appliqué, un trait en pointillé à l'application d'un signal somme [a+b] ou [a'+b'].

Les inventeurs ont établi que, avec une puce Ach selon l'invention, une fois les nuages séparés par l'application de pulsations différentes sur chacun des guides d'une paire, on pouvait, par application d'un signal somme à un des guides d'onde de l'autre paire, repousser les deux nuages du côté opposé à celui du guide « allumé » avec le signal somme. Pendant que les nuages décrivent la première trajectoire TZ un courant d'intensité constante est appliqué au(x) fil(s) W1 (W2).

Un premier exemple de première trajectoire TZ par déplacement des deux nuages piégés est illustré figure 16, le déplacement étant illustré à différents instants t0 à t12 de la séquence temporelle d'adressage. Les signaux appliqués aux guides en fonction du temps sont illustrés figure 17. Les unités sur les axes sont arbitraires. $P_{CPWX1}$ est la puissance du signal microonde appliqué à CPWX1. Dans cet exemple non limitatif la puce a deux fils W1 et W2 selon les deux diagonales de P, la surface S d'évasement est carrée et l'axe Y' coïncide avec l'axe Y, mais le principe est valable pour toutes les géométries de puce atomique selon l'invention.

Juste avant t0 on initialise les états internes en superposant de manière cohérente les atomes ultrafroids entre les états |a> et |b> par une première impulsion π/2. Un courant continu $I_{W1}$ est imposé au fil conducteur W1, et un courant continu $I_{W2}$, pouvant être égal à $I_{W1}$ mais pas nécessairement, est imposé au fil W2. Les deux états internes |a> et |b> sont superposés de manière cohérente et spatialement à l'aplomb du point O dans un piège T (équivalent de l'étape B0 et de l'instant t0 de la figure 3, ou du t0 de la figure 6).

Commence alors la phase de libre évolution.

Entre t0 et t1, la puissance micro-ondes injectée dans les guides d'onde CPWX1 et CPWX2 passe progressivement de 0 à sa valeur maximale. Une pulsation $\omega_a$ est envoyée dans le guide d'onde CPWX1 et une pulsation $\omega_b$ est envoyée dans le guide d'onde CPWX2, ce qui permet de séparer les deux nuages d'états internes différents de part et d'autre de l'axe de symétrie X jusqu'aux positions schématisées dans t1. Le piège T à atomes ultrafroids décrit précédemment à l'instant t0 est alors transformé en deux pièges T1 et T2 à atomes ultrafroids, chaque piège permettant d'immobiliser un nuage d'atomes ultrafroids d'états internes différents de l'autre piège (en l'occurrence d'état interne |a> dans l'un des pièges, par exemple T1, et d'état interne |b> dans l'autre piège T2). Rappelons qu'une fréquence ωa (ou wa') appliqué à un guide d'onde « pousse » les atomes piégés dans l'état |a> (T1) du côté opposé à ce guide d'onde, et qu'une fréquence ωb (ou ωb') appliqué à un guide d'onde « pousse » les atomes piégés dans l'état |b> (T2) du côté opposé à ce guide d'onde. Chaque nuage est illustré par une texture différente, T1 en rayures et T2 en points. Ceci est l'équivalent du temps t1 de la figure 3 et de la figure 6.

Entre t1 et t2, selon une variante, la puissance microonde appliquée à CPWX1 et CPWX2 diminue jusqu'à 0 alors que la puissance microonde appliquée à CPWX1' et CPWX2' augmentent de 0 à sa valeur maximale. Les pièges T1 et T2 sont repoussés plus loin de l'axe X, ce qui permet d'augmenter l'aire comprise dans la trajectoire TZ et donc la sensibilité du capteur.

Entre t2 et t3 la puissance microonde du guide CPWY2 passe progressivement de 0 à sa valeur maximale par application d'un signal microonde somme formé de la superposition d'un signal microonde à une pulsation ωa' et d'un signal microonde de pulsation ωb'. Les pulsations wa' et ωb' sont a priori différentes de ωa et ωb, mais selon un cas particulier peuvent être égales (wa'=wa, ωb'=ωb). De manière générale les couples (ωa, ωb) et (wa', wb') sont choisi en fonction du matériau utilisé pour les atomes. Pour le cas du Rubidium 87 ils sont reliés aux transitions Zeeman (voir publication Ammar et al précitée). Le prime sert uniquement à différencier ce qui est appliqué aux guides selon X et aux guides selon Y, mais les deux couples sont interchangeables.

L'effet de cette puissance microonde « somme » est de repousser les deux nuages du côté opposé à celui où se trouve le guide CPWY2, les deux nuages étant toujours maintenus séparés d'une distance d selon X par l'application des signaux à CPWX1' et CPWX2'. La composante à ωa dans le guide CPWY2 permet de pousser l'état |a> du côté opposé à CPWY2, soit vers CPWY1 et la composante à ωb dans le guide CPWY2 permet de pousser l'état |b> du côté opposé à CPWY2, soit vers CPWY1. En appliquant un signal superposant les deux fréquences, ici par exemple à CPWY2, on repousse les deux nuages dans la même direction avec le même guide. Les deux pièges sont repoussés à droite de l'axe Y (non représenté). On dénomme « force de poussée » la force permettant, par allumage de guides microonde, de pousser les nuages d'atomes.

La surface S des fils W1 et W2 créent un piège dit piège magnétique DC, ce piège exerce une force de rappel sur les atomes. Cette force de rappel s'oppose à la force de poussée. A courant fixe dans W1 et W2, pour des pièges situés à des distances (selon Z) proches des fils, cette force de rappel diminue quand on augmente la largeur du fil, c'est-à-dire ici la surface S. Donc pour tirer le meilleur parti possible de cette force qui pousse les nuages, il faut diminuer la force de rappel du piège magnétique DC.

Ceci est d'autant plus vrai que dans l'invention seuls les champs microonde sont utilisés pour « pousser » les atomes. Les inventeurs ont montré que la force de rappel est suffisamment diminuée, pour la génération des trajectoires fermées des nuages, lorsque la surface S englobe le parallélogramme P.

Pour obtenir une plus grande aire couverte par la trajectoire TZ selon une variante de t3 à t4 la puissance appliquée à CPWY2 diminue à 0 tandis que la puissance appliquée à CPWY1 augmente de 0 à sa valeur maximale. Les pièges T1 et T2 sont repoussés encore plus loin de l'axe Y.

Entre t4 et t5 la puissance somme appliquée à CPWY2 est maintenue pour continuer à repousser les atomes de Y. La puissance appliquée à CPWX1' et CPWX2' diminue jusqu'à 0 tandis que la puissance appliquée à CPWX1 et CPWX2 augmente, pour rapprocher les nuages atomes de l'axe X.

De t5 à t6 la puissance somme appliquée à CPWY2 est maintenue pour continuer à repousser les atomes de Y. La puissance appliquée à CPWX1 et CPWX2 diminue jusqu'à 0, et les deux nuages se retrouvent sur l'axe X.

De t7 à t12 on applique des puissances microonde symétriques pour que chaque nuage décrive la portion non encore décrite de la trajectoire TZ afin d'obtenir pour chaque nuage le parcours d'une trajectoire fermée.

Pendant la séquence temporelle de t0 à t12 les deux nuages atomiques ont décrit la trajectoire TZ en sens inverse, ce qui permet la mesure d'une vitesse de rotation Ωz tel qu'expliqué précédemment.

Pour augmenter encore l'aire comprise à l'intérieur de TZ selon une variante on allume également avec un signal somme le guide CPWY1' (et donc simultanément on diminue la puissance appliquée à CPWY1) tel qu'illustré sur la figure 17bis dans laquelle les étapes du déplacement s'effectuent de t0 à t14. On repousse les nuages encore plus loin de Y.

Pendant toute la séquence temporelle du déplacement des nuages selon la première trajectoire TZ (et de leur recombinaison), l'intensité appliquée aux deux fils est restée constante ($I_{W1}$ à W1 et $I_{W2}$ à W2), le déplacement n'est piloté que par l'application des signaux microonde aux différents guides d'onde de la puce Ach. Comme les courants dans W1 et W2 ainsi que le champ homogène 20 ne changent pas pendant la séquence, le piège magnétique DC ne bouge pas (contrairement au document WO2017089489 où on éteint progressivement un fil pour en allumer un autre ce qui a pour effet de déplacer le piège magnétique DC). Dans l'invention ce sont uniquement les changements des champs micro-ondes (puissance, fréquence et guide dans lequel ils se propagent) qui permettent de déplacer les deux pièges habillés et donc de déplacer les atomes.

Ainsi dans la séquence temporelle d'interférométrie séparation/déplacement selon un premier mode de réalisation pour la mesure autour de Z, au moins les guides selon X de la première paire la plus proche de l'axe X (CPWX1, CPWX2) sont parcourus simultanément par des signaux microondes de pulsations ωa ou ωb, à certains instants dénommés premier ensemble d'instants E1. Dans l'exemple de la figure 16 : {t1, t5, t7, t11}.

En variante comme illustré figure 16 les guides selon X des autres premières paires sont également successivement parcourus simultanément par des signaux microondes de pulsations $\omega a$ ou $\omega b$, à certains instants différents du premier ensemble d'instants. Dans la figure 16 : {t2, t3, t4, t8, t9, t10} pour CPWX1' CPWX2'.

De plus au moins un des guides selon Y' d'au moins la deuxième paire la plus proche de Y' est parcouru par un signal microonde formé de la superposition d'un signal microonde à une pulsation $\omega a'$ et d'un signal microonde de pulsation $\omega b'$, à certains instants dénommés deuxième ensemble d'instants E2. Dans l'exemple de la figure 16 : CPWY2 à {t3, t9}.

En variante comme également illustré figure 16 l'autre guide selon Y' de la deuxième paire la plus proche de Y' est également parcouru par un signal microonde formé de la superposition d'un signal microonde à une pulsation wa' et d'un signal microonde de pulsation $\omega b'$, à certains instants différents du deuxième ensemble. Dans l'exemple de la figure 16 : CPWY1 à {t4, t5, t6, t7, t8}.

E2 présente dans certains cas (pas ceux de l'exemple de la figure 16) des instants en commun avec le premier ensemble d'instants E1.

En variante tel qu'illustré figure 17bis on allume ensuite le guide selon Y' de la paire plus éloignée de Y' situé du même côté que le guide selon Y' précédemment allumé. L'allumage successif des guides selon Y' d'un même côté permet de repousser plus loin les nuages.

En outre le ou les fils conducteurs sont chacun traversé(s) d'un courant constant pendant la séparation, le déplacement et la recombinaison desdits pièges.

Ainsi dans ce premier mode de réalisation on a séparé les deux nuages par rapport à X et repousser conjointement les deux nuages par rapport à Y.

Selon un deuxième mode de réalisation pour la mesure autour de Z on décrit une trajectoire TZ en inversant les rôles de X et Y, tel qu'illustré sur la figure 18 : on sépare par rapport à Y et on repousse selon X.

Selon un deuxième aspect l'invention concerne un capteur à atomes ultrafroids 20 permettant une mesure de vitesse de rotation selon au moins l'axe Z tel qu'illustré figure 19.

Le capteur 20 comprend une puce atomique Ach telle que décrite précédemment placée dans une enceinte à vide (non représentée) et une source d'atomes SA agencée pour générer un nuage d'atomes ultrafroids 12 près du plan XY de la puce atomique Ach. Les atomes ultrafoids présentent, lors de la phase d'initialisation de la mise en œuvre du capteur, une superposition d'états internes |a> et |b>.

Le capteur 20 comprend également un générateur GB d'un champ magnétique homogène B0, préférentiellement parallèle au plan de la puce, au moins un processeur UT, au moins un générateur de tension ou de courant continu GDC adapté à commander des courants électriques dans lesdits fils conducteurs et au moins un générateur de tension ou de courant micro-ondes GMW connecté audits guides d'ondes. Typiquement il peut y avoir un générateur GMW pour les 8 guides, ou 2 générateurs ou 4 générateurs... Les guides d'ondes selon X et Y' et les fils conducteurs W1 et W2, sont configurés pour réaliser les étapes suivantes lors de la mise en œuvre du capteur :

D'abord l'énergie des atomes ultrafroids est modifiée de manière à créer un minima de potentiel pour les atomes ultrafroids dans l'état interne |a> et un minima de potentiel pour les atomes ultrafroids dans l'état interne |b>, formant ainsi un premier piège T1 et deuxième piège T2 à atomes ultrafroids, un piège permettant d'immobiliser un nuage d'atomes ultrafroids 12 dans un état interne différent de l'autre piège, à une distance maîtrisée h du plan de mesure (idem étapes A0 et B0).

Puis les deux pièges T1 et T2 sont séparés spatialement et déplacés suivant une première trajectoire TZ fermée comprise dans un plan perpendiculaire à Z parcourue dans un sens par les atomes ultrafroids du premier piège et dans le sens opposé par les atomes ultrafroids du deuxième piège.

Le capteur comprend également un système de détection d'intensité optique SDET adapté à mesurer au moins une population d'atomes ultrafroids dans un des états internes.

Le capteur intégrant une puce atomique selon l'invention permet d'obtenir, grâce au piège « mou » et aux guides microondes, une séparation des atomes plus importante et une aire comprise dans la trajectoire également plus importante comparé aux capteurs de l'état de la technique, le capteur selon l'invention est ainsi plus sensible aux accélérations et aux rotations, ce qui induit un temps de navigation autonome plus long.

La puce Ach selon l'invention permet également la mesure d'une vitesse de rotation $\Omega x$ selon X avec des pièges parcourant une deuxième trajectoire fermée TX situé dans un plan perpendiculaire à X et la mesure d'une vitesse de rotation $\Omega y$ selon Y' avec des pièges parcourant une troisième trajectoire fermée TY' situé dans un plan perpendiculaire à Y'.

Pour cela selon un premier mode de réalisation on utilise la séquence interférométrique décrite dans le document FR2004743, le passage de h1 à h2 pour la réalisation des trajectoires « verticales » TX et TY' étant réalisé par application aux deux fils de signaux continus à deux paliers (voir chronogramme de la figure 6). La surface S réduit la différence entre h1 et h2 et donc la sensibilité du capteur.

Pour pallier à ce problème, les inventeurs ont mis au point un deuxième mode de réalisation utilisant une nouvelle séquence interférométrique utilisant des signaux somme. En effet les inventeurs ont montré que l'application de ces signaux somme permettait de « repousser » les nuages atomiques vers le haut soit vers les Z positifs. Les inventeurs ont montré que la force de poussée n'est pas parfaitement horizontale mais contient une faible composante verticale, et lorsque l'on applique $\omega a$ (ou wa') à CPWX1 et CPWX2 en même temps on annule la composante horizontale et on exacerbe l'effet de la composante verticale. Cela a pour effet d'éloigner l'état |a> de la surface de la puce. De même si on applique ωb (ou ωb') on éloigne l'état |b> de la puce. Et donc lorsqu'on applique un signal somme superposant ωa et ωb (ou wa' et wb') on éloigne les deux états |a> et |b> de la puce. Cet effet permet donc de générer des trajectoires verticales.

Un exemple de réalisation d'une trajectoire TX est illustré figure 20 et le chronogramme correspondant des puissances microonde appliquées aux guides est illustré figure 21, en reprenant la géométrie de puce de la figure 16.

Entre t0 et t1, et entre t1 et t2, la séquence est identique à la figure 16.

Une fois les nuages séparés selon X, entre t2 et t3 on applique progressivement un signal somme [a'+b'] simultanément aux deux guides selon Y CPWY1 et CPWY2, jusqu'à une valeur maximale atteinte en t2. Cette application simultanée du signal somme aux deux guides selon Y provoque un éloignement des nuages du plan initial, permettant d'opérer un passage d'une première hauteur h1 à une deuxième hauteur h2 pour les nuages atomiques 12, sans modifier leur position en x et y.

De t3 à t4 et de t4 à t5 les nuages se rapprochent de X de la même manière que t4-t5-t6 sur la figure 16, par diminution du signal microonde appliqué aux deux guides selon X les plus éloignés CPWX1' CPWX2' tout en augmentant le signal appliqué aux deux guides selon X les plus proches de X CPWX1 CPWX2, puis par diminution du signal appliqué à ces deux guides selon X les plus proches de X.

Puis de t5 à t6 par inversion des fréquences appliquées les nuages se croisent et « passent de l'autre côté » de X.

De t7 à t8 la diminution progressive du signal somme appliqué aux deux guides selon Y' fait redescendre les deux nuages à h1, puis de t8 à t9 et de t9 à t10 la diminution progressive des signaux à fréquence unique successivement appliqués aux guides selon X les plus éloignés, puis les plus proches de X, provoque le rapprochement des nuages du point O et à t10 ils se retrouvent à l'aplomb de celui-ci.

Pendant toute la séquence les rubans W1 et W2 ont été soumis respectivement à une intensité $I_{W1}$ et $I_{W2}$ de valeur constante, les deux valeurs n'étant pas nécessairement identiques.

On a ainsi réalisé une trajectoire TX perpendiculaire à l'axe X telle qu'illustrée figure 5 en appliquant simultanément des signaux microondes de pulsations ωa ou ωb à au moins les guides selon X de la première paire la plus proche de X (CPWX1, CPWX2), à certains instants dénommé troisième ensemble d'instants E3. Dans l'exemple de la figure 20 {t1, t4, t6, t9}.

Selon une variante pour augmenter l'aire incluse dans la trajectoire TX, les guides selon X des autres premières paires (CPWX1', CPWX2' dans la figure 20) sont successivement parcourus simultanément par des signaux microondes de pulsations ωa ou ωb, à certains instants différents du troisième ensemble d'instants. Dans la figure 20 : {t2, t3, t7, t8}.

De plus les guides selon Y' de la deuxième paire la plus proche de l'axe Y' sont simultanément parcourus par un signal microonde formé de la superposition d'un signal microonde à une pulsation wa' et d'un signal microonde de pulsation ωb' pour opérer un passage de la première hauteur à la deuxième hauteur, à certains instants dénommé quatrième ensemble d'instant E4. Dans l'exemple de la figure 20 {t3, t4, t5, t6, t7}.

E4 présente des instants en commun avec E3.

En outre le ou les fils conducteurs sont chacun traversé(s) d'un courant constant pendant la séparation, le déplacement et la recombinaison des dits pièges.

De même la réalisation d'une trajectoire TY est illustré figure 22, en reprenant la géométrie de puce de la figure 16 et selon le même esprit que pour TX.

Ainsi lors de la séquence de génération de TY :

- au moins les guides selon Y' de la deuxième paire la plus proche de l'axe Y' sont parcourus simultanément par des signaux microondes de pulsations ωa' ou ωb', à certains instants dénommé troisième ensemble d'instants.

Selon une variante pour augmenter l'aire incluse dans la trajectoire TY, les guides selon Y' des autres premières paires (CPWY1', CPWY2' dans la figure 22) sont successivement parcourus simultanément par des signaux microondes de pulsations ωa ou ωb, à certains instants différents du troisième ensemble d'instants.

- les guides d'ondes selon X de la première paire la plus proche de X sont simultanément parcourus par un signal microonde formé de la superposition d'un signal microonde à une pulsation ωa et d'un signal microonde de pulsation ωb pour opérer un passage de la première hauteur à la deuxième hauteur, à certains instants dénommé quatrième ensemble d'instant présentant des instants en commun avec le troisième ensemble d'instants.

- le ou les fils conducteurs sont chacun traversé(s) d'un courant constant pendant la séparation, le déplacement et la recombinaison des dits pièges.

L'avantage très important du capteur 20 intégrant une puce Ach selon l'invention est que l'on réalise, avec une géométrie simple à 8 guides d'onde et deux fils conducteurs, un capteur gyroscopique 3 axes. L'originalité du capteur selon l'invention est d'une part la géométrie de la puce, et d'autre part d'appliquer, lors de sa mise en œuvre, à certains guides d'ondes et à certains instant, un signal somme tel que défini précédemment tout en appliquant un signal d'amplitude constante sur les rubans conducteurs.

Ce même capteur permet également une mesure d'horloge et une mesure d'accélération selon les deux axes X et Y'. Pour mesurer une accélération selon un axe de mesure, il convient de faire parcourir aux deux nuages un segment de droite perpendiculaire à l'axe de mesure. A titre d'exemple on peut utiliser simplement le signal à fréquence unique sur chaque guide selon X pour réaliser la séparation des deux nuages.

Selon un troisième aspect l'invention concerne un procédé de mesure d'une vitesse de rotation autour d'un axe X, Y' ou Z, dénommé axe de mesure, par un capteur à atomes ultrafroids comprenant une puce atomique selon l'invention. Le procédé comprend les étapes consistant à :

**A** Générer un nuage de dits atomes ultrafroids (12), incluant des phases d'émission desdits atomes, de refroidissement desdits atomes, d'initialisation desdits atomes dans au moins un état interne |a> et de piégeage d'un nuage de dits atomes ultrafroids dans un minimum local de potentiel,

**B** Initialiser les états internes en superposant de manière cohérente lesdits atomes ultrafroids entre lesdits états |a> et |b> par une première impulsion $\pi/$ **2** ;

**C** Séparer spatialement un nuage de dits atomes de dit état interne |a> dans un piège (T1) d'un nuage de dits atomes de dit état interne |b> dans un autre piège (T2), et déplacer lesdits pièges en sens opposé suivant une trajectoire fermée contenue dans un plan perpendiculaire à l'axe de mesure et initialisée à partir du point O:

- en appliquant une tension ou un courant à fréquences micro-ondes prédéterminées auxdits guides d'ondes selon une séquence prédéterminée,

- et en appliquant une valeur constante de tension ou de courant continu au premier et le cas échéant au deuxième fil(s) conducteur(s),

**D** Recombiner lesdits états internes |a> et |b> en appliquant auxdits atomes ultrafroids une deuxième impulsion $\pi/$ **2** puis mesurer la densité d'atomes dans un état interne choisi parmi au moins |a> et |b>;

**E** Déterminer la phase Sagnac desdits atomes ultrafroids et calculer la vitesse de rotation dudit capteur selon ledit axe de mesure.

Pour la mesure d'une vitesse de rotation autour de l'axe Z, pendant l'étape **C** la séquence inclut l'application à certains instants d'un signal microonde formé de la superposition d'un signal microonde à une pulsation $\omega a$ et d'un signal microonde de pulsation $\omega b$, à au moins un des guides selon X d'au moins la première paire la plus proche de l'axe X, ou l'application d'un signal microonde formé de la superposition d'un signal microonde à une pulsation $\omega a'$ et d'un signal microonde de pulsation $\omega b'$, à au moins un des guides selon Y' d'au moins la deuxième paire la plus proche de l'axe Y'.

Pour la mesure d'une vitesse de rotation autour de l'axe X ou de l'axe Y', pendant l'étape **C** la séquence inclut :

- pour la mesure de la vitesse de rotation autour de l'axe X, l'application à certains instants d'un signal microonde formé de la superposition d'un signal microonde à une pulsation $\omega a$ et d'un signal micro-onde de pulsation $\omega b$, simultanément aux deux guides selon X de la première paire la plus proche de l'axe X,

- pour la mesure de la vitesse de rotation autour de l'axe Y', l'application à certains instants d'un signal microonde formé de la superposition d'un signal microonde à une pulsation $\omega a'$ et d'un signal micro-onde de pulsation $\omega b'$, simultanément aux deux guides selon Y' de la deuxième paire la plus proche de l'axe Y'.

Pour le mode de réalisation de la puce atomique comprenant deux fils conducteurs de chargements W1C et W2C, à l'étape A le piégeage du nuage d'atomes ultrafroids au voisinage de la puce atomique s'effectue avec les fils de chargement. On les allume pour transférer le nuage atomique du piège primaire (ou MOT : piège magnéto-optique) à l'aplomb du croisement des deux fils W1C et W2C, via le piège créé avec la superposition des champs magnétiques induit par les courants passant dans les fils de chargement W1C et W2C et du champ homogène. Puis le courant appliqué aux fils de chargement est progressivement coupé et le piège créé par les courants dans les fils W1 (et W2) est progressivement allumé. Pour cela les courants dans W1C et W2C sont progressivement éteint et en parallèle les courants dans les W1 et W2 sont progressivement allumé. Lors de ce transfert la valeur du champ homogène peut varier.

Lorsque W1C et W2C ne sont pas présent sur la puce atomique alors le transfert du piège primaire vers l'aplomb du croisement de W1 et W2 (identique à l'aplomb du croisement des fils W1C et W2C) se fait directement (sans l'intermédiaire des fils de chargement).

Selon un quatrième aspect l'invention concerne une puce atomique matricielle dont chaque élément de la matrice forme une puce élémentaire selon l'invention tel que décrit précédemment.

Quatre éléments d'une première variante de puce matricielle AchM sont illustrés figure 23. La puce matricielle comprend un premier ensemble de N premiers fils conducteurs W1n indicés n et un deuxième ensemble de M deuxième fils conducteurs W2m indicés m perpendiculaires entre eux et formant respectivement les N lignes et les M colonnes de la matrice.

Chacun des premiers fils conducteurs W1n et des deuxième fils conducteurs W2m indicés m est confondus respectivement avec un axe Xn indicé n et un axe Ym indicé m. Les différentes premières paires de guides selon Xn sont ainsi communes à tous les pixels de la ligne n et les différentes deuxième paires de guides selon Ym sont ainsi communes à tous les pixels de la colonne m, chaque pixel de la matrice formant une puce élémentaire Ach(n,m). Les puces élémentaires agencées en matrice sont localisées sur le même substrat.

Quatre éléments d'une deuxième variante de puce matricielle AchM' élément sont illustrés figure 24. La puce matricielle AchM' comprend un premier ensemble de N premiers fils conducteurs W1n indicés n et un deuxième ensemble de M deuxième fils conducteurs W2m indicés m perpendiculaires entre eux et formant respectivement des N lignes et des M colonnes d'une matrice. On définit des axes Xk indicés k selon des premières diagonales Dk de la matrice et des axes Yl indicés l selon des deuxièmes diagonales D'l perpendiculaires aux première diagonales.

La puce matricielle comprend également des premières paires de guides d'onde selon chaque axe Xk et des deuxièmes paires de guides d'onde selon chaque axe Yl. Chaque pixel de la matrice forme une puce élémentaire Ach(n,m).

Selon un autre aspect l'invention concerne un capteur à atome ultrafroids intégrant une puce matricielle selon l'invention. Intégrées à un capteur, les puces élémentaires permettent d'effectuer en parallèle plusieurs mesures d'au moins une grandeur choisie parmi : ax, ay, $\Omega$x, $\Omega$y, $\Omega$z. Elles peuvent également mesurer un temps t. Les mesures effectuées en parallèle tiennent compte des séquences appliquées aux guides d'ondes.

Les puces élémentaires sont de plus reconfigurables pour pouvoir effectuer d'autres mesures lors d'une autre séquence. La puce matricielle est reconfigurée selon les besoins : le type de mesure souhaité (ax, ay, $\Omega$x, $\Omega$y, $\Omega$z, t), la précision souhaitée (fonction du nombre de puce réalisant simultanément la mesure), etc... On réalise ainsi sur une même puce matricielle des mesures en parallèle, redondantes et/ou complémentaires.

## Revendications

1. Puce atomique (Ach) pour capteur à atomes ultrafroids, comportant un plan de mesure XY repéré par un axe X et un axe Y orthogonaux, ledit plan de mesure étant normal à un axe Z, la puce atomique comprenant :

   - une pluralité de première paires de guides d'ondes, une première paire étant constituée d'un premier (CPWX1, CPWX1') et un deuxième (CPWX2, CPWX2') guide d'ondes coplanaires, parallèles entre eux et disposés symétriquement de part et d'autre d'un axe dont la projection dans le plan XY est selon l'axe X, dénommées paires de guides selon X,
   - une pluralité de deuxième paires de guides d'ondes, une deuxième paire étant constituée d'un premier (CPWY'1, CPWY'1') et un deuxième (CPWY'2, CPWY'2') guide d'ondes coplanaires parallèles entre eux et disposés symétriquement de part et d'autre d'un axe dont la projection dans le plan XY est selon un axe Y' différent de l'axe X, dénommées paires de guides selon Y',

      les paires de guides selon X étant isolés électriquement des paires de guides selon Y',
      les projections dans le plan XY de la première paire la plus éloignée de X et de la deuxième paire la plus éloignée de Y' formant à leur intersection un parallélogramme (P) de centre O,

   - un premier fil (W1) conducteur présentant une projection dans le plan XY selon X ou Y' ou une diagonale (D1, D2) dudit parallélogramme, le premier fil conducteur étant adapté à être traversé par un courant continu,
   - ledit premier fil présentant un évasement de manière à prendre la forme d'une surface (S) dont la projection dans le plan XY englobe ledit parallélogramme (P) et présente une symétrie par rapport au point O.

2. Puce atomique selon la revendication 1 comprenant en outre un deuxième fil conducteur (W2) coplanaire avec le premier fil conducteur, le premier et le deuxième fils étant orientés respectivement selon X et Y' ou inversement, ou selon une première (D1) et une deuxième diagonale (D2) du parallélogramme ou inversement.

3. Puce atomique selon l'une des revendications précédentes dans laquelle l'axe Y' est confondu avec l'axe Y.

4. Puce atomique selon la revendication précédente dans laquelle ladite surface (S) est choisie parmi : un ovale, un cercle, un polygone, un rectangle, un carré.

5. Puce atomique selon l'une des revendications précédentes comprenant en outre un premier (W1C) et un deuxième (W2C) fils de chargement, conducteurs et isolés électriquement du ou des fils conducteurs, dont les projections dans le plan XY sont sécantes en O.

6. Puce atomique selon la revendication précédente et comprenant deux fils conducteurs, dans laquelle les projections des fils de chargement coïncident avec les projections des fils conducteurs en dehors de la surface (S).

7. Puce atomique selon l'une des revendications 5 ou 6 dans laquelle les guides selon X, les guides selon Y', le ou les fils conducteurs, et les fils de chargement occupent chacun un niveau différent de la puce.

8. Puce atomique selon la revendication précédente dans laquelle les fils de chargement occupent le niveau de la puce le plus éloigné du plan de mesure.

9. Capteur à atomes ultrafroids (20) permettant une mesure de vitesse de rotation ($\Omega z$) selon au moins l'axe Z comprenant :

- une puce atomique (ACh) selon l'une des revendications 1 à 8 placée dans une enceinte à vide,
- une source d'atomes (SA) agencée pour générer un nuage (12) d'atomes ultrafroids près dudit plan XY de ladite puce atomique, lesdits atomes ultrafoids présentant, lors de la phase d'initialisation de la mise en œuvre du capteur, une superposition d'états internes |a> et |b>
- un générateur (GB) d'un champ magnétique homogène (B0),
- au moins un processeur (UT), au moins un générateur de tension ou de courant continu (GDC) connectés au(x)dit(s) fil(s) conducteur(s) et au moins un générateur de tension ou de courant micro-ondes (GMW) connecté audits guides d'ondes,
- lesdits guides d'ondes et lesdits fils conducteurs étant configurés, lors de la mise en œuvre du capteur, pour :

- modifier l'énergie desdits atomes ultrafroids de manière à créer un minima de potentiel pour les atomes ultrafroids dans l'état interne |a> et un minima de potentiel pour les atomes ultrafroids dans l'état interne |b>, formant ainsi un premier (T1) et deuxième (T2) pièges à atomes ultrafroids, un piège permettant d'immobiliser un nuage d'atomes ultrafroids (12) dans un état interne différent de l'autre piège, à une distance maîtrisée dudit plan de mesure, et
- séparer spatialement les deux pièges et déplacer lesdits pièges (T1, T2) suivant au moins une première trajectoire fermée (TZ) comprise dans un plan perpendiculaire à Z, et parcourue dans un sens par les atomes ultrafroids du premier piège et dans le sens opposé par les atomes ultrafroids du deuxième piège,

- le capteur comprenant en outre un système de détection d'intensité optique (SDET) adapté à mesurer au moins une population de dits atomes ultrafroids dans un dit état interne.

10. Capteur à atomes ultrafroids selon la revendication précédente dans lequel, lors de la séquence de séparation et de déplacement desdits pièges :

- au moins les guides selon X de la première paire la plus proche de l'axe X sont parcourus simultanément par des signaux microondes de pulsations $\omega a$ ou $\omega b$, à certains instants dénommés premier ensemble d'instants,
- au moins un des guides selon Y' d'au moins la deuxième paire la plus proche de Y' est parcouru par un signal microonde formé de la superposition d'un signal microonde à une pulsation $\omega a'$ et d'un signal microonde de pulsation $\omega b'$, à certains instants dénommés deuxième ensemble d'instants,
- le ou les fils conducteurs étant chacun traversé(s) d'un courant constant pendant la séparation, le déplacement et la recombinaison desdits pièges.

11. Capteur à atomes ultrafroids selon la revendication précédente dans lequel les guides selon X des autres premières paires sont également successivement parcourus simultanément par des signaux microondes de pulsations $\omega a$ ou $\omega b$, à certains instants différents du premier ensemble d'instants.

12. Capteur à atomes ultrafroids selon la revendication 9 dans lequel, lors de la séquence de séparation et de déplacement desdits pièges:

- au moins les guides selon Y' de la deuxième paire la plus proche de l'axe Y' sont parcourus simultanément par des signaux microondes de pulsations wa' ou $\omega b'$, à certains instants dénommés premier ensemble d'instants,
- au moins un des guides selon X d'au moins la première paire la plus proche de X est parcouru par un signal microonde formé de la superposition d'un signal microonde à une pulsation $\omega a$ et d'un signal microonde de pulsation $\omega b$, à certains instants dénommés deuxième ensemble d'instants présentant des instants en commun avec le premier ensemble d'instants,
- le ou les fils conducteurs étant chacun traversé(s) d'un courant constant pendant la séparation, le déplacement et la recombinaison des dits pièges.

13. Capteur à atomes ultrafroids selon la revendication précédente dans lequel les guides selon Y' des autres deuxièmes paires sont également successivement parcourus simultanément par des signaux microondes de pulsations ωa' ou ωb', à certains instants différents du premier ensemble d'instants.

14. Capteur à atomes ultrafroids (20) selon l'une des revendications 9 à 13 permettant en outre une mesure de vitesse de rotation selon les axes X et Y', dans lequel lesdits guides d'ondes et le ou les fils conducteurs sont en outre configurés,

> - pour déplacer lesdits pièges (T1, T2) suivant une deuxième trajectoire fermée (TX) comprise dans un plan perpendiculaire à X, lors de la mesure de la vitesse de rotation (Ωx) selon l'axe X,
> - pour déplacer lesdits pièges (T1, T2) suivant une troisième trajectoire fermée (TY') comprise dans un plan perpendiculaire à Y', lors de la mesure de la vitesse de rotation (Ωy') selon l'axe Y,
> - lesdites trajectoires fermées étant parcourues dans un sens par les atomes ultrafroids du premier piège et dans le sens opposé par les atomes ultrafroids du deuxième piège, les deuxième et troisième trajectoires comprenant chacune au moins une première portion localisée à une première hauteur (h1) du plan XY et une deuxième portion localisée à une deuxième hauteur (h2) strictement supérieure à la première hauteur.

15. Capteur selon la revendication précédente dans lequel, lors de la mise en œuvre de la mesure de la vitesse de rotation (Ωx) selon l'axe X par génération de la deuxième trajectoire fermée (TX),

> - au moins les guides selon X de la première paire la plus proche de X sont parcourus simultanément par des signaux microondes de pulsations ωa ou ωb, à certains instants dénommé troisième ensemble d'instants,
> - les guides selon Y' de la deuxième paire la plus proche de l'axe Y' sont simultanément parcourus par un signal microonde formé de la superposition d'un signal microonde à une pulsation wa' et d'un signal microonde de pulsation ωb' pour opérer un passage de la première hauteur à la deuxième hauteur, à certains instants dénommé quatrième ensemble d'instant présentant des instants en commun avec le troisième ensemble d'instants,
> - le ou les fils conducteurs sont chacun traversé(s) d'un courant constant pendant la séparation, le déplacement et la recombinaison des dits pièges.

16. Capteur selon la revendication précédente dans lequel les guides selon X des autres premières paires sont successivement parcourus simultanément par des signaux microondes de pulsations ωa ou ωb, à certains instants différents du troisième ensemble d'instants.

17. Capteur selon la revendication 14 dans lequel, lors de la mise en œuvre de la mesure de la vitesse de rotation (Ωy') selon l'axe Y' par génération de la troisième trajectoire fermée (TY'),

> - au moins les guides selon Y' de la deuxième paire la plus proche de l'axe Y' sont parcourus simultanément par des signaux microondes de pulsations wa' ou ωb', à certains instants dénommé troisième ensemble d'instants,
> - les guides d'ondes selon X de la première paire la plus proche de X sont simultanément parcourus par un signal microonde formé de la superposition d'un signal microonde à une pulsation ωa et d'un signal microonde de pulsation ωb pour opérer un passage de la première hauteur à la deuxième hauteur, à certains instants dénommé quatrième ensemble d'instant présentant des instants en commun avec le troisième ensemble d'instants,
> - le ou les fils conducteurs sont chacun traversé(s) d'un courant constant pendant la séparation, le déplacement et la recombinaison des dits pièges.

18. Capteur selon la revendication précédente dans lequel les guides selon Y' des autres deuxièmes paires sont successivement parcourus simultanément par des signaux microondes de pulsations ωa' ou ωb', à certains instants différents du troisième ensemble d'instants.

19. Puce atomique matricielle (AchM) selon l'une des revendications 3 à 8 comprenant :

> - un premier ensemble de N premiers fils conducteurs (W1n) indicés n et un deuxième ensemble de M deuxième fils conducteurs (W2m) indicés m perpendiculaires entre eux et formant respectivement des N lignes et des M colonnes d'une matrice,

chacun des premiers fils conducteurs indicés n et des deuxième fils conducteurs indicés m étant confondus respectivement avec un axe Xn indicé n et un axe Ym indicé m, les premières paires de guides selon Xn étant ainsi communes à tous les pixels de la ligne n et les deuxième paires de guides selon Ym étant ainsi communes à tous les pixels de la colonne m, chaque pixel de la matrice formant une puce élémentaire (Ach(n,m)).

20. Puce atomique matricielle (AchM') selon l'une des revendications 3 à 8 comprenant :

- un premier ensemble de N premiers fils conducteurs (W1n) indicés n et un deuxième ensemble de M deuxième fils conducteurs (W2m) indicés m perpendiculaires entre eux et formant respectivement des N lignes et des M colonnes d'une matrice,

on définit des axes Xk indicés k selon des premières diagonales (Dk) de la matrice et des axes Yl indicés l selon des deuxièmes diagonales (D'l) perpendiculaires aux première diagonales, la puce matricielle comprenant également des premières paires de guides d'onde selon chaque axe Xk et des deuxièmes paires de guides d'onde selon chaque axe Yl, chaque pixel de la matrice formant une puce élémentaire (Ach(n,m)).

21. Capteur à atomes ultrafroids comprenant :

- une puce atomique matricielle selon l'une des revendications 19 ou 20,
- une source d'atomes (SA) agencée pour générer un nuage (12) d'atomes ultrafroids près dudit plan XY de ladite puce atomique,
- un générateur (GB) d'un champ magnétique homogène (B0),
- au moins un processeur (UT), au moins un générateur de tension ou de courant continu (GDC) adapté à commander des courants électriques dans lesdits fils conducteurs et au moins un générateur de tension ou de courant micro-ondes (GMW) connecté audits guides d'ondes,
- un système de détection d'intensité optique (SDET),

le capteur étant adapté pour mesurer, selon les besoins et de manière reconfigurable, au moins une accélération (ax, ay) et/ou une vitesse de rotation ($\Omega$x, $\Omega$y, $\Omega$z) selon une direction correspondant à celle des axes Xn ou Xk, et/ou des axes Ym ou Yl, et/ou une vitesse de rotation ($\Omega$z) selon l'axe Z, à partir desdites puces élémentaires.

22. Procédé de mesure d'une vitesse de rotation autour d'au moins un axe dénommé axe de mesure, par un capteur à atomes ultrafroids comprenant une puce atomique, ladite puce atomique étant placée dans une enceinte à vide et comportant un plan de mesure XY repéré par un axe X et un axe Y orthogonaux, ledit plan de mesure étant normal à un axe Z, la puce atomique comprenant :

- une pluralité de première paires de guides d'ondes, une première paire étant constituée d'un premier (CPWX1, CPWX1') et un deuxième (CPWX2, CPWX2') guide d'ondes coplanaires, parallèles entre eux et disposés symétriquement de part et d'autre d'un axe dont la projection dans le plan XY est selon l'axe X, dénommées paires de guides selon X,
- une pluralité de deuxième paires de guides d'ondes, une deuxième paire étant constituée d'un premier (CPWY'1, CPWY'1') et un deuxième (CPWY'2, CPWY'2') guide d'ondes coplanaires parallèles entre eux et disposés symétriquement de part et d'autre d'un axe dont la projection dans le plan XY est selon un axe Y' différend de l'axe X, dénommées paires de guides selon Y',

les paires de guides selon X étant isolés électriquement des paires de guides selon Y',
les projections dans le plan XY de la première paire la plus éloignée de X et de la deuxième paire la plus éloignée de Y' formant à leur intersection un parallélogramme (P) de centre O,

- un premier fil (W1) conducteur présentant une projection dans le plan XY selon X ou Y' ou une diagonale (D1, D2) dudit parallélogramme, le premier fil conducteur étant adapté à être traversés par un courant continu,
- ledit premier fil présentant un évasement de manière à prendre la forme d'une surface (S) dont la projection dans le plan XY englobe ledit parallélogramme (P) et présente une symétrie par rapport au point O.

le procédé comprenant les étapes consistant à :

**A** Générer un nuage de dits atomes ultrafroids (12), incluant des phases d'émission desdits atomes, de refroidissement desdits atomes, d'initialisation desdits atomes dans au moins un état interne |a> et de piégeage d'un nuage de dits atomes ultrafroids dans un minimum local de potentiel,
**B** Initialiser des états internes en superposant de manière cohérente lesdits atomes ultrafroids entre le dit état |a> et un état interne |b> différent de |a> par une première impulsion $\pi$ / **2** ;
**C** Séparer spatialement un nuage de dits atomes de dit état interne |a> dans un piège (T1) d'un nuage de dits atomes de dit état interne |b> dans un autre piège (T2), et déplacer lesdits pièges en sens opposé suivant une trajectoire fermée contenue dans un plan perpendiculaire à l'axe de mesure et initialisée à partir du point O:

- en appliquant une tension ou un courant à fréquences micro-ondes prédéterminées auxdits guides d'ondes selon une séquence prédéterminée,

- et en appliquant une valeur constante de tension ou de courant continu au premier et le cas échéant au deuxième fil(s) conducteur(s),

**D** Recombiner lesdits états internes |a> et |b> en appliquant auxdits atomes ultrafroids une deuxième impulsion π / 2 puis mesurer la densité d'atomes dans un état interne choisi parmi au moins |a> et |b>;

**E** Déterminer la phase Sagnac desdits atomes ultrafroids et calculer la vitesse de rotation dudit capteur selon ledit axe de mesure.

23. Procédé de mesure selon la revendication précédente, pour la mesure d'une vitesse de rotation autour de l'axe Z, dans lequel pendant l'étape **C** ladite séquence inclut l'application à certains instants d'un signal microonde formé de la superposition d'un signal microonde à une pulsation ωa et d'un signal microonde de pulsation ωb, à au moins un des guides selon X d'au moins la première paire la plus proche de l'axe X, ou l'application d'un signal microonde formé de la superposition d'un signal microonde à une pulsation wa' et d'un signal microonde de pulsation ωb', à au moins un des guides selon Y' d'au moins la deuxième paire la plus proche de l'axe Y'.

24. Procédé de mesure selon la revendication 22, pour la mesure d'une vitesse de rotation autour de l'axe X ou de l'axe Y', dans lequel pendant l'étape **C** ladite séquence inclut :

- pour la mesure de la vitesse de rotation autour de l'axe X, l'application à certains instants d'un signal microonde formé de la superposition d'un signal microonde à une pulsation ωa et d'un signal microonde de pulsation ωb, simultanément aux deux guides selon X de la première paire la plus proche de l'axe X,
- pour la mesure de la vitesse de rotation autour de l'axe Y', l'application à certains instants d'un signal microonde formé de la superposition d'un signal microonde à une pulsation wa' et d'un signal microonde de pulsation ωb', simultanément aux deux guides selon Y' de la deuxième paire la plus proche de l'axe Y'.

25. Procédé de mesure selon l'une des revendications 22 à 24, la puce atomique comprenant en outre un premier (W1C) et un deuxième (W2C) fils de chargement, conducteurs et isolés électriquement du premier fil, et le cas échéant du deuxième, fil(s) conducteur(s), dont les projections dans le plan XY sont sécantes en O, et dans lequel, à l'étape A, le piégeage du nuage d'atomes ultrafroids au voisinage de la puce atomique s'effectue avec lesdits fils de chargement.

**Patentansprüche**

1. Atomchip (Ach) für einen Sensor für ultrakalte Atome, mit einer XY-Messebene, die durch eine X-Achse und eine Y-Achse bestimmt ist, die orthogonal zueinander sind, wobei die Messebene normal zu einer Z-Achse ist, wobei der Atomchip Folgendes umfasst:

- eine Vielzahl von ersten Paaren von Wellenleitern, wobei ein erstes Paar aus einem ersten (CPWX1, CPWX1') und einem zweiten (CPWX2, CPWX2') Wellenleiter, die komplanar, parallel zueinander und symmetrisch zu beiden Seiten einer Achse angeordnet sind, deren Projektion in der XY-Ebene entlang der X-Achse verläuft, bezeichnet als Leiterpaare entlang X,
- eine Vielzahl von zweiten Paaren von Wellenleitern, wobei ein zweites Paar aus einem ersten (CPWY'1, CPWY'1') und einem zweiten (CPWY'2, CPWY'2') Wellenleiter, die komplanar, parallel zueinander und symmetrisch zu beiden Seiten einer Achse angeordnet sind, deren Projektion in der XY-Ebene entlang einer sich von der X-Achse unterscheidenden Y'-Achse verläuft, bezeichnet als Leiterpaare entlang Y',

wobei die Leiterpaare entlang X elektrisch von den Leiterpaaren entlang Y' isoliert sind,
wobei die Projektionen in der XY-Ebene des ersten Paares, das am weitesten von X entfernt ist, und des zweiten Paares, das am weitesten von Y' entfernt ist, an ihrem Schnittpunkt ein Parallelogramm (P) mit Mittelpunkt O bilden,

- wobei ein erster Leitungsdraht (W1) eine Projektion in der XY-Ebene entlang X oder Y' oder eine Diagonale (D1, D2) des Parallelogramms aufweist, wobei der erste Leitungsdraht so angepasst ist, dass er von einem Gleichstrom durchflossen werden kann,
- wobei der erste Draht eine Aufweitung aufweist, sodass er die Form einer Fläche (S) annimmt, deren Projektion in der XY-Ebene das Parallelogramm (P) umschließt und eine Symmetrie in Bezug auf den Punkt O aufweist.

2. Atomchip nach Anspruch 1, ferner umfassend einen zweiten Leitungsdraht (W2), der komplanar zum ersten Leitungsdraht ist, wobei der erste und der zweite Draht jeweils entlang X und Y' oder umgekehrt, oder entlang einer ersten (D1) und einer zweiten (D2) Diagonale des Parallelogramms oder umgekehrt, ausgerichtet sind.

3. Atomchip nach einem der vorhergehenden Ansprüche, wobei die Y'-Achse mit der Y-Achse zusammenfällt.

4. Atomchip nach dem vorhergehenden Anspruch, wobei die Fläche (S) aus einer der folgenden Formen ausgewählt ist: Oval, Kreis, Polygon, Rechteck, Quadrat.

5. Atomchip nach einem der vorhergehenden Ansprüche, ferner umfassend einen ersten (W1C) und einen zweiten (W2C) Ladungsdraht, die leitfähig und elektrisch von dem oder den Leitungsdrähten isoliert sind und deren Projektionen in der XY-Ebene sich in O schneiden.

6. Atomchip nach dem vorhergehenden Anspruch und umfassend zwei Leitungsdrähte, wobei die Projektionen der Ladungsdrähte mit den Projektionen der Leitungsdrähte außerhalb der Fläche (S) übereinstimmen.

7. Atomchip nach einem der Ansprüche 5 oder 6, wobei die Leiter entlang X, die Leiter entlang Y', der Leitungsdraht oder die Leitungsdrähte und die Ladungsdrähte jeweils eine unterschiedliche Ebene des Chips einnehmen.

8. Atomchip nach dem vorhergehenden Anspruch, wobei die Ladungsdrähte die Ebene des Chips einnehmen, die am weitesten von der Messebene entfernt ist.

9. Sensor für ultrakalte Atome (20) zur Messung einer Drehgeschwindigkeit ($\Omega z$) mindestens entlang der Z-Achse, Folgendes umfassend:

- einen Atomchip (ACh) nach einem der Ansprüche 1 bis 8, der in einer Vakuumkammer platziert ist,
- eine Atomquelle (SA), die so angeordnet ist, dass sie eine Wolke (12) aus ultrakalten Atomen in der Nähe der XY-Ebene des Atomchips erzeugt,
wobei die ultrakalten Atome während der Initialisierungsphase der Implementierung des Sensors eine Überlagerung der inneren Zustände |a> und |b> aufweisen,
- einen Generator (GB) für ein homogenes Magnetfeld (B0),
- mindestens einen Prozessor (UT), mindestens einen Spannungs- oder Gleichstromgenerator (GDC), der mit dem Leitungsdraht/den Leitungsdrähten verbunden ist, und mindestens einen Spannungs- oder Mikrowellenstromgenerator (GMW), der mit den Wellenleitern verbunden ist,
- wobei die Wellenleiter und die Leitungsdrähte dazu konfiguriert sind, bei der Implementierung des Sensors:

- die Energie der ultrakalten Atome so zu verändern, dass ein Potentialminimum für die ultrakalten Atome im inneren Zustand |a> und ein Potentialminimum für die ultrakalten Atome im inneren Zustand |b> geschaffen wird, wodurch eine erste (T1) und eine zweite (T2) Falle für ultrakalte Atome gebildet werden, wobei eine Falle es ermöglicht, eine Wolke aus ultrakalten Atomen (12) in einem von der anderen Falle unterschiedlichen inneren Zustand in einem kontrollierten Abstand von der Messebene zu immobilisieren, und
- die beiden Fallen räumlich zu trennen und die Fallen (T1, T2) entlang mindestens einer ersten geschlossenen Bahn (TZ) zu verschieben, die in einer zu Z senkrechten Ebene umfasst ist, und in einer Richtung von den ultrakalten Atomen der ersten Falle und in der entgegengesetzten Richtung von den ultrakalten Atomen der zweiten Falle durchlaufen zu werden,
- wobei der Sensor ferner ein optisches Intensitätserkennungssystem (SDET) umfasst, das angepasst ist, um mindestens eine Population der ultrakalten Atome in einem inneren Zustand zu messen.

10. Sensor für ultrakalte Atome nach dem vorhergehenden Anspruch, wobei, während der Trennungs- und Verschiebungssequenz der Fallen:

- mindestens die Leiter entlang X des ersten Paares, das der X-Achse am nächsten liegt, gleichzeitig von Mikrowellensignalen mit den Winkelfrequenzen $\omega a$ oder $\omega b$ durchlaufen werden, zu bestimmten Zeitpunkten, die als erster Satz von Zeitpunkten bezeichnet werden,
- mindestens einer der Leiter entlang Y' mindestens des zweiten Paares, das Y' am nächsten liegt, von einem Mikrowellensignal durchlaufen wird, das aus der Überlagerung eines Mikrowellensignals mit einer Winkelfrequenz $\omega a'$ und eines Mikrowellensignals mit einer Winkelfrequenz $\omega b'$ gebildet wird, zu bestimmten Zeitpunkten, die als zweiter Satz von Zeitpunkten bezeichnet werden,
- wobei der Leitungsdraht oder die Leitungsdrähte während der Trennung, der Verschiebung und der Rekombination der Fallen jeweils von einem konstanten Strom durchflossen werden.

**11.** Sensor für ultrakalte Atome nach dem vorhergehenden Anspruch, wobei die Leiter entlang X der anderen ersten Paare auch nacheinander gleichzeitig von Mikrowellensignalen mit Winkelfrequenzen ωa oder ωb zu bestimmten Zeitpunkten, die sich von dem ersten Satz von Zeitpunkten unterscheiden, durchlaufen werden.

**12.** Sensor für ultrakalte Atome nach Anspruch 9, wobei, während der Trennungs- und Verschiebungssequenz der Fallen:

- mindestens die Leiter entlang Y' des zweiten Paares, das der Y'-Achse am nächsten liegt, gleichzeitig von Mikrowellensignalen mit den Winkelfrequenzen ωa' oder ωb' durchlaufen werden, zu bestimmten Zeitpunkten, die als erster Satz von Zeitpunkten bezeichnet werden,
- mindestens einer der Leiter entlang X mindestens des ersten Paares, das X am nächsten liegt, von einem Mikrowellensignal durchlaufen wird, das aus der Überlagerung eines Mikrowellensignals mit einer Winkelfrequenz ωa und eines Mikrowellensignals mit einer Winkelfrequenz ωb gebildet wird, zu bestimmten Zeitpunkten, die als zweiter Satz von Zeitpunkten bezeichnet werden und Zeitpunkte mit dem ersten Satz von Zeitpunkten gemeinsam haben,
- wobei der oder die Leitungsdrähte während der Trennung, der Verschiebung und der Rekombination der Fallen jeweils von einem konstanten Strom durchflossen werden.

**13.** Sensor für ultrakalte Atome nach dem vorhergehenden Anspruch, wobei die Leiter entlang Y' der anderen zweiten Paare auch nacheinander gleichzeitig von Mikrowellensignalen mit Winkelfrequenzen ωa' oder ωb' zu bestimmten Zeitpunkten, die sich von dem ersten Satz von Zeitpunkten unterscheiden, durchlaufen werden.

**14.** Sensor für ultrakalte Atome (20) nach einem der Ansprüche 9 bis 13, der ferner eine Messung der Drehgeschwindigkeit entlang der Achsen X und Y' ermöglicht, wobei die Wellenleiter und der oder die Leitungsdrähte ferner dazu konfiguriert sind,

- die Fallen (T1, T2) während der Messung der Drehgeschwindigkeit (ex) entlang der X-Achse entlang einer zweiten geschlossenen Bahn (TX) zu verschieben, die in einer Ebene senkrecht zu X umfasst ist,
- die Fallen (T1, T2) während der Messung der Drehgeschwindigkeit (Ωy') entlang der Y-Achse entlang einer dritten geschlossenen Bahn (TY') zu verschieben, die in einer Ebene senkrecht zu Y' umfasst ist,
- wobei die geschlossenen Bahnen in einer Richtung von den ultrakalten Atomen der ersten Falle und in der entgegengesetzten Richtung von den ultrakalten Atomen der zweiten Falle durchlaufen werden, wobei die zweite und die dritte Bahn jeweils mindestens einen ersten Abschnitt umfassen, der sich in einer ersten Höhe (h1) der XY-Ebene befindet, und einen zweiten Abschnitt, der sich in einer zweiten Höhe (h2) befindet, die streng größer ist als die erste Höhe.

**15.** Sensor nach dem vorhergehenden Anspruch, wobei, während der Implementierung der Messung der Drehgeschwindigkeit (Ωx) entlang der X-Achse durch Erzeugung der zweiten geschlossenen Bahn (TX),

- mindestens die Leiter entlang X des ersten Paares, das der X-Achse am nächsten liegt, gleichzeitig von Mikrowellensignalen mit den Winkelfrequenzen ωa oder ωb zu bestimmten Zeitpunkten, die als dritter Satz von Zeitpunkten bezeichnet werden, durchlaufen werden,
- die Leiter entlang Y' des zweiten Paares, das der Y'-Achse am nächsten liegt, gleichzeitig von einem Mikrowellensignal durchlaufen werden, das aus der Überlagerung eines Mikrowellensignals mit einer Winkelfrequenz ωa' und eines Mikrowellensignals mit einer Winkelfrequenz ωb' gebildet wird, um einen Übergang von der ersten Höhe zur zweiten Höhe zu bewirken, zu bestimmten Zeitpunkten, die als vierter Satz von Zeitpunkten bezeichnet werden und gemeinsame Zeitpunkte mit dem dritten Satz von Zeitpunkten aufweisen,
- wobei der Leitungsdraht oder die Leitungsdrähte während der Trennung, der Verschiebung und der Rekombination der Fallen jeweils von einem konstanten Strom durchflossen werden.

**16.** Sensor nach dem vorhergehenden Anspruch, wobei die Leiter entlang X der anderen ersten Paare nacheinander gleichzeitig von Mikrowellensignalen mit Winkelfrequenzen ωa oder ωb zu bestimmten Zeitpunkten, die sich von dem dritten Satz von Zeitpunkten unterscheiden, durchlaufen werden.

**17.** Sensor nach Anspruch 14, wobei, während der Implementierung der Messung der Drehgeschwindigkeit (Ωy') entlang der Y'-Achse durch Erzeugung der dritten geschlossenen Bahn (TY'),

- mindestens die Leiter entlang Y' des zweiten Paares, das der Y'-Achse am nächsten liegt, gleichzeitig von Mikrowellensignalen mit Winkelfrequenzen ωa' oder ωb' zu bestimmten Zeitpunkten, die als dritter Satz von Zeitpunkten bezeichnet werden, durchlaufen werden,

- die Wellenleiter entlang X des ersten Paares, das X am nächsten liegt, gleichzeitig von einem Mikrowellensignal durchlaufen werden, das aus der Überlagerung eines Mikrowellensignals mit einer Winkelfrequenz ωa und eines Mikrowellensignals mit einer Winkelfrequenz ωb gebildet wird, um einen Übergang von der ersten Höhe zur zweiten Höhe zu bewirken, zu bestimmten Zeitpunkten, die als vierter Satz von Zeitpunkten bezeichnet werden und die gemeinsame Zeitpunkte mit dem dritten Satz von Zeitpunkten aufweisen,

- wobei der Leitungsdraht oder die Leitungsdrähte während der Trennung, der Verschiebung und der Rekombination der Fallen von einem konstanten Strom durchflossen werden.

18. Sensor nach dem vorhergehenden Anspruch, wobei die Leiter entlang Y' der anderen zweiten Paare nacheinander gleichzeitig von Mikrowellensignalen mit Winkelfrequenzen ωa' oder ωb' zu bestimmten Zeitpunkten, die sich von dem dritten Satz von Zeitpunkten unterscheiden, durchlaufen werden.

19. Matrix-Atomchip (AchM) nach einem der Ansprüche 3 bis 8, Folgendes umfassend:

- einen ersten Satz von N ersten Leitungsdrähten (W1n), die mit n indiziert sind, und einen zweiten Satz von M zweiten Leitungsdrähten (W2m), die mit m indiziert sind, die senkrecht zueinander stehen und jeweils N Zeilen und M Spalten einer Matrix bilden,

wobei jeder der ersten Leitungsdrähte mit dem Index n und jeder der zweiten Leitungsdrähte mit dem Index m jeweils mit einer Achse Xn mit dem Index n und einer Achse Ym mit dem Index m zusammenfällt, wobei die ersten Leiterpaare entlang Xn somit allen Pixeln der Zeile n gemeinsam sind und die zweiten Leiterpaare entlang Ym somit allen Pixeln der Spalte m gemeinsam sind, wobei jedes Pixel der Matrix einen Elementarchip (Ach(n,m)) bildet.

20. Matrix-Atomchip (AchM') nach einem der Ansprüche 3 bis 8, Folgendes umfassend:

- einen ersten Satz von N ersten Leitungsdrähten (W1n), die mit n indiziert sind, und einen zweiten Satz von M zweiten Leitungsdrähten (W2m), die mit m indiziert sind, die senkrecht zueinander stehen und jeweils N Zeilen und M Spalten einer Matrix bilden, wobei man Xk-Achsen definiert, die mit k indiziert sind, entlang erster Diagonalen (Dk) der Matrix und Yl-Achsen, die mit l indiziert sind, entlang zweiter Diagonalen (Dl), die senkrecht zu den ersten Diagonalen stehen,

wobei der Matrixchip auch erste Paare von Wellenleitern entlang jeder Xk-Achse und zweite Paare von Wellenleitern entlang jeder Yl-Achse umfasst, wobei jedes Pixel der Matrix einen Elementarchip (Ach(n,m)) bildet.

21. Sensor für ultrakalte Atome, Folgendes umfassend:

- einen Matrix-Atomchip nach einem der Ansprüche 19 oder 20,
- eine Atomquelle (SA), die so angeordnet ist, dass sie eine Wolke (12) aus ultrakalten Atomen in der Nähe der XY-Ebene des Atomchips erzeugt,
- einen Generator (GB) für ein homogenes Magnetfeld (B0),
- mindestens einen Prozessor (UT), mindestens einen Spannungs- oder Gleichstromgenerator (GDC), der angepasst ist, um elektrische Ströme in den Leitungsdrähten anzusteuern, und mindestens einen Spannungs- oder Mikrowellenstromgenerator (GMW), der mit den Wellenleitern verbunden ist,
- ein optisches Intensitätserkennungssystem (SDET),

wobei der Sensor angepasst ist, um je nach Bedarf und rekonfigurierbar mindestens eine Beschleunigung (ax, ay) und/oder eine Drehgeschwindigkeit (Ωx, Ωy, Ωz) in einer Richtung entsprechend derjenigen der Achsen Xn oder Xk und/oder der Achsen Ym oder Yl und/oder eine Drehgeschwindigkeit (Ωz) entlang der Achse Z der Elementarchips zu messen.

22. Verfahren zur Messung einer Drehgeschwindigkeit um mindestens eine Achse, die als Messachse bezeichnet wird, durch einen Sensor für ultrakalte Atomen, der einen Atomchip umfasst, wobei der Atomchip in einer Vakuumkammer platziert ist und eine XY-Messebene aufweist, die durch eine X-Achse und eine Y-Achse bestimmt ist, die zueinander orthogonal sind, wobei die Messebene normal zu einer Z-Achse steht und wobei der Atomchip Folgendes umfasst:

- eine Vielzahl von ersten Paaren von Wellenleitern, wobei ein erstes Paar aus einem ersten (CPWX1, CPWX1') und einem zweiten (CPWX2, CPWX2') Wellenleiter, die komplanar, parallel zueinander und symmetrisch zu beiden Seiten einer Achse angeordnet sind, deren Projektion in der XY-Ebene entlang der X-Achse verläuft, bezeichnet als Leiterpaare entlang X,
- eine Vielzahl von zweiten Paaren von Wellenleitern, wobei ein zweites Paar aus einem ersten (CPWY'1, CPWY' 1') und einem zweiten (CPWY'2, CPWY'2') Wellenleiter, die komplanar, parallel zueinander und symmetrisch zu beiden Seiten einer Achse angeordnet sind, deren Projektion in der XY-Ebene entlang einer sich von der X-Achse unterscheidenden Y'-Achse verläuft, bezeichnet als Leiterpaare entlang Y',

wobei die Leiterpaare entlang X elektrisch von den Leiterpaaren entlang Y' isoliert sind,

wobei die Projektionen in der XY-Ebene des ersten Paares, das am weitesten von X entfernt ist, und des zweiten Paares, das am weitesten von Y' entfernt ist, an ihrem Schnittpunkt ein Parallelogramm (P) mit Mittelpunkt O bilden,

- wobei ein erster Leitungsdraht (W1) eine Projektion in der XY-Ebene entlang X oder Y' oder einer Diagonale (D1, D2) des Parallelogramms aufweist, wobei der erste Leitungsdraht so angepasst ist, dass er von einem Gleichstrom durchflossen werden kann,
- wobei der erste Draht eine Aufweitung aufweist, sodass er die Form einer Fläche (S) annimmt, deren Projektion in der XY-Ebene das Parallelogramm (P) umschließt und eine Symmetrie in Bezug auf den Punkt O aufweist.

wobei das Verfahren die Schritte umfasst, bestehend aus Folgendem:

A Erzeugen einer Wolke der ultrakalten Atome (12), einschließlich Phasen der Emission der Atome, der Kühlung der Atome, der Initialisierung der Atome in mindestens einem inneren Zustand |a> und des Fangens einer Wolke aus den ultrakalten Atomen in einem lokalen Potentialminimum,

B Initialisieren von inneren Zuständen durch kohärentes Überlagern der ultrakalten Atome zwischen dem Zustand |a> und einem inneren Zustand |b>, der sich von |a> um einen ersten Impuls $\pi/2$ unterscheidet;

C räumliches Trennen einer Wolke der Atome mit innerem Zustand |a> in einer Falle (T1) von einer Wolke der Atome im inneren Zustand |b> in einer anderen Falle (T2) und Verschieben der Fallen in entgegengesetzte Richtungen entlang einer geschlossenen Bahn, die in einer zur Messachse senkrechten Ebene enthalten ist und vom Punkt O aus initialisiert wird:

- durch Anlegen einer Spannung oder eines Stroms mit vorbestimmten Mikrowellenfrequenzen an die Wellenleiter in einer vorbestimmten Reihenfolge,
- und Anlegen eines konstanten Spannungs- oder Gleichstromwerts an den ersten und gegebenenfalls an den zweiten Leitungsdraht,

D Rekombinieren der inneren Zustände |a> und |b> durch Anlegen eines zweiten Impulses $\pi/2$ an die ultrakalten Atome und anschließendes Messen der Atomdichte in einem inneren Zustand, der aus mindestens |a> und |b> ausgewählt ist;

E Bestimmen der Sagnac-Phase der ultrakalten Atome und Berechnen der Drehgeschwindigkeit des Sensors entlang der Messachse.

23. Messverfahren nach dem vorhergehenden Anspruch zur Messung einer Drehgeschwindigkeit um die Z-Achse, wobei während des Schritts C die Sequenz das Anlegen eines Mikrowellensignals, das aus der Überlagerung eines Mikrowellensignals mit einer Winkelfrequenz $\omega a$ und eines Mikrowellensignals mit einer Winkelfrequenz $\omega b$ gebildet wird, an mindestens einen der Leiter entlang X von mindestens dem ersten Paar, das der X-Achse am nächsten liegt, oder das Anlegen eines Mikrowellensignals einschließt, das aus der Überlagerung eines Mikrowellensignals mit einer Winkelfrequenz $\omega a'$ und eines Mikrowellensignals mit einer Winkelfrequenz $\omega b'$ gebildet wird, an mindestens einen der Leiter entlang Y' von mindestens dem zweiten Paar, das der Y'-Achse am nächsten liegt.

24. Messverfahren nach Anspruch 22 zur Messung einer Drehgeschwindigkeit um die X-Achse oder die Y'-Achse, wobei während des Schritts C die Sequenz Folgendes einschließt:

- zur Messung der Drehgeschwindigkeit um die X-Achse, das Anlegen eines Mikrowellensignals, das aus der Überlagerung eines Mikrowellensignals mit einer Winkelfrequenz $\omega a$ und eines Mikrowellensignals mit einer Winkelfrequenz $\omega b$ gebildet wird, zu bestimmten Zeitpunkten gleichzeitig an die beiden Leiter entlang X des ersten Paares, das der X-Achse am nächsten liegt,
- zur Messung der Drehgeschwindigkeit um die Y'-Achse, das Anlegen eines Mikrowellensignals, das aus der Überlagerung eines Mikrowellensignals mit einer Winkelfrequenz $\omega a'$ und eines Mikrowellensignals mit einer Winkelfrequenz $\omega b'$ gebildet wird, zu bestimmten Zeitpunkten gleichzeitig an die beiden Leiter entlang Y' des zweiten Paares, das der Y'-Achse am nächsten liegt.

25. Messverfahren nach einem der Ansprüche 22 bis 24, wobei der Atomchip ferner einen ersten (W1C) und einen zweiten (W2C) Ladungsdraht umfasst, die elektrisch leitend und voneinander isoliert sind, und gegebenenfalls einen Leitungsdraht oder mehrere Leitungsdrähte, deren Projektionen in der XY-Ebene sich in O schneiden,

und wobei in Schritt A das Fangen der Wolke aus ultrakalten Atomen in der Nähe des Atomchips mit den Ladungsdrähten erfolgt.

**Claims**

1. An atom chip (Ach) for an ultra-cold atom sensor, containing a measurement plane XY defined by an axis X and an axis Y that are orthogonal, said measurement plane being normal to an axis Z, the atom chip comprising:

   - a plurality of first pairs of waveguides, a first pair consisting of a first (CPWX1, CPWX1') and a second (CPWX2, CPWX2') waveguide that are coplanar, parallel to one another and arranged symmetrically on either side of an axis whose projection in the plane XY is along the axis X, called pairs of guides along X,
   - a plurality of second pairs of waveguides, a second pair consisting of a first (CPWY'1, CPWY' 1') and a second (CPWY'2, CPWY'2') waveguide that are coplanar, parallel to one another and arranged symmetrically on either side of an axis whose projection in the plane XY is along an axis Y' different from the axis X, called pairs of guides along Y',

      the pairs of guides along X being electrically insulated from the pairs of guides along Y', the projections in the plane XY of the first pair furthest from X and of the second pair furthest from Y' forming, at their intersection, a parallelogram (P) with a centre O,

      - a first conductive wire (W1) having a projection in the plane XY along X or Y' or a diagonal (D1, D2) of said parallelogram, the first conductive wire being adapted to be flowed through by a direct current,
      - said first wire having a flaring so as to take the form of a surface (S) whose projection in the plane XY incorporates said parallelogram (P) and has symmetry about the point O,

2. The atom chip according to claim 1, further comprising a second conductive wire (W2) coplanar with the first conductive wire, the first and the second wire being oriented respectively along X and Y' or vice versa, or along a first (D1) and a second diagonal (D2) of the parallelogram or vice versa.

3. The atom chip according to one of the preceding claims, wherein the axis Y' coincides with the axis Y.

4. The atom chip according to the preceding claim, wherein said surface (S) is chosen from: an oval, a circle, a polygon, a rectangle, a square.

5. The atom chip according to one of the preceding claims, further comprising a first (W1C) and a second (W2C) loading wire that are conductive and electrically insulated from the one or more conductive wires and whose projections in the plane XY are secant at O.

6. The atom chip according to the preceding claim and comprising two conductive wires, wherein the projections of the loading wires coincide with the projections of the conductive wires outside the surface (S).

7. The atom chip according to one of claims 5 or 6, wherein the guides along X, the guides along Y', the one or more conductive wires and the loading wires each occupy a different level of the chip.

8. The atom chip according to the preceding claim, wherein the loading wires occupy the level of the chip furthest from the measurement plane.

9. An ultra-cold atom sensor (20) for measuring a speed of rotation (Ωz) about at least the axis Z, comprising:

   - an atom chip (ACh) according to one of claims 1 to 8 placed in a vacuum chamber,
   - an atom source (SA) arranged to generate a cloud (12) of ultra-cold atoms near said plane XY of said atom chip,
   said ultra-cold atoms having, during the phase of initialisation of the implementation of the sensor, a superposition of internal states |a> and |b>,
   - a generator (GB) of a uniform magnetic field (B0),
   - at least one processor (UT), at least one direct current or voltage generator (GDC) connected to said conductive wire(s) and at least one microwave current or voltage generator (GMW) connected to said waveguides,
   - said waveguides and said conductive wires being configured, during the implementation of the sensor, to:

      - modify the energy of said ultra-cold atoms so as to create a potential minimum for the ultra-cold atoms in the internal state |a> and a potential minimum for the ultra-cold atoms in the internal state |b>, thus forming a first (T1) and a second (T2) ultra-cold-atom-trap, one trap allowing to immobilise a cloud of ultra-cold atoms (12) in an internal state different from the other trap, at a managed distance from said measurement plane, and

- spatially separate the two traps and move said traps (T1, T2) along at least a first closed path (TZ) comprised in a plane perpendicular to Z, and be passed through in one direction by the ultra-cold atoms of the first trap and in the opposite direction by the ultra-cold atoms of the second trap,

- the sensor further comprising a system for detecting optical intensity (SDET), adapted to measure at least one population of said ultra-cold atoms in a said internal state.

10. The ultra-cold atom sensor according to the preceding claim, wherein, in the sequence of separating and moving said traps:

- at least the guides along X of the first pair closest to the axis X are passed through simultaneously by microwave signals with angular frequencies ωa or ωb, at certain times called first set of times,

- at least one of the guides along Y' of at least the second pair closest to Y' is passed through by a microwave signal formed by the superposition of a microwave signal with an angular frequency ωa' and a microwave signal with an angular frequency ωb', at certain times called second set of times,

- the one or more conductive wires each being flowed through by a constant current during the separation, the movement and the recombination of said traps.

11. The ultra-cold atom sensor according to the preceding claim, wherein the guides along X of the other first pairs are also successively passed through simultaneously by microwave signals with angular frequencies ωa or ωb, at certain times different from the first set of times.

12. The ultra-cold atom sensor according to claim 9, wherein, in the sequence of separating and moving said traps:

- at least the guides along Y' of the second pair closest to the axis Y' are passed through simultaneously by microwave signals with angular frequencies ωa' or ωb', at certain times called first set of times,

- at least one of the guides along X of at least the first pair closest to X is passed through by a microwave signal formed by the superposition of a microwave signal with an angular frequency ωa and a microwave signal with an angular frequency ωb, at certain times called second set of times having times in common with the first set of times,

- the one or more conductive wires each being flowed through by a constant current during the separation, the movement and the recombination of said traps.

13. The ultra-cold atom sensor according to the preceding claim, wherein the guides along Y' of the other second pairs are also successively passed through simultaneously by microwave signals with angular frequencies ωa' or ωb', at certain times different from the first set of times.

14. The ultra-cold atom sensor (20) according to one of claims 9 to 13, further allowing measurement of a speed of rotation along the axes X and Y', wherein said waveguides and the one or more conductive wires are further configured so as:

- to move said traps (T1, T2) along a second closed path (TX) comprised within a plane perpendicular to X, during the measurement of the speed of rotation (Ωx) along the axis X,

- to move said traps (T1, T2) along a third closed path (TY') comprised within a plane perpendicular to Y', during the measurement of the speed of rotation (Ωy') along the axis Y,

- said closed paths being passed through in one direction by the ultra-cold atoms of the first trap and in the opposite direction by the ultra-cold atoms of the second trap, the second and third paths each comprising at least one first portion located at a first height (h1) from the plane XY and a second portion located at a second height (h2) strictly greater than the first height.

15. The sensor according to the preceding claim, wherein, when implementing the measurement of the speed of rotation (Ωx) along the axis X by generating the second closed path (TX),

- at least the guides along X of the first pair closest to X are passed through simultaneously by microwave signals with angular frequencies ωa or ωb, at certain times called third set of times,

- the guides along Y' of the second pair closest to the axis Y' are simultaneously passed through by a microwave signal formed by the superposition of a microwave signal with an angular frequency ωa' and a microwave signal with an angular frequency ωb' in order to switch from the first height to the second height, at certain times called fourth set of times having times in common with the third set of times,

- the one or more conductive wires are each flowed through by a constant current during the separation, the movement and the recombination of said traps.

**16.** The sensor according to the preceding claim, wherein the guides along X of the other first pairs are successively passed through simultaneously by microwave signals with angular frequencies ωa or ωb, at certain times different from the third set of times.

**17.** The sensor according to claim 14, wherein, when implementing the measurement of the speed of rotation (Ωy') along the axis Y' by generating the third closed path (TY'),

- at least the guides along Y' of the second pair closest to the axis Y' are passed through simultaneously by microwave signals with angular frequencies ωa' or ωb', at certain times called third set of times,
- the waveguides along X of the first pair closest to X are simultaneously passed through by a microwave signal formed by the superposition of a microwave signal with an angular frequency ωa and a microwave signal with an angular frequency ωb to switch from the first height to the second height, at certain times called fourth set of times having times in common with the third set of times,
- the one or more conductive wires are each flowed through by a constant current during the separation, the movement and the recombination of said traps.

**18.** The sensor according to the preceding claim, wherein the guides along Y' of the other second pairs are successively passed through simultaneously by microwave signals with angular frequencies ωa' or ωb', at certain times different from the third set of times.

**19.** The matrix atom chip (AchM) according to one of claims 3 to 8 comprising:

- a first set of N first conductive wires (W1n) indexed n and a second set of M second conductive wires (W2m) indexed m that are mutually perpendicular and that respectively form N rows and M columns of a matrix array, each of the first conductive wires indexed n and the second conductive wires indexed m being coincident respectively with an axis Xn indexed n and an axis Ym indexed m, the first pairs of guides along Xn thus being common to all of the pixels of the row n and the second pairs of guides along Ym thus being common to all of the pixels of the column m, each pixel of the matrix forming an elementary chip (Ach(n,m)).

**20.** The matrix atom chip (AchM') according to one of claims 3 to 8 comprising:

- a first set of N first conductive wires (W1n) indexed n and a second set of M second conductive wires (W2m) indexed m that are mutually perpendicular and that respectively form N rows and M columns of a matrix array, axes Xk indexed k are defined along first diagonals (Dk) of the matrix and axes Yl indexed l are defined along second diagonals (D'l) perpendicular to the first diagonals, the matrix chip also comprising first pairs of waveguides along each axis Xk and second pairs of waveguides along each axis Yl, each pixel of the matrix forming an elementary chip (Ach(n,m)).

**21.** An ultra-cold atom sensor, comprising:

- a matrix-array atom chip according to one of claims 19 or 20,
- an atom source (SA) arranged to generate a cloud (12) of ultra-cold atoms near said plane XY of said atom chip,
- a generator (GB) of a uniform magnetic field (B0),
- at least one processor (UT), at least one direct current or voltage generator (GDC) adapted to control electric currents in said conductive wires and at least one microwave current or voltage generator (GMW) connected to said waveguides,
- a system (SDET) for detecting optical intensity,

the sensor being adapted for measuring, as required and in a reconfigurable manner, at least one acceleration (ax, ay) and/or one speed of rotation (Ωx, Ωy, Ωz) about at least one direction corresponding to that of the axes Xn or Xk, and/or the axes Ym or Yl, and/or a speed of rotation (Ωz) about the axis Z, from said elementary chips.

**22.** A method for measuring a speed of rotation about at least a so-called measurement axis, by an ultra-cold atom sensor comprising an atom chip, said atom chip being placed in a vacuum chamber and containing a measurement plane XY defined by an axis X and an axis Y that are orthogonal, said measurement plan being normal to an axis Z, the atom chip comprising:

- a plurality of first pairs of waveguides, a first pair consisting of a first (CPWX1, CPWX1') and a second (CPWX2, CPWX2') waveguide that are coplanar, parallel to one another and arranged symmetrically on either side of an axis whose projection in the plane XY is along the axis X, called pairs of guides along X,
- a plurality of second pairs of waveguides, a second pair consisting of a first (CPWY'1, CPWY' 1') and a second (CPWY'2, CPWY'2') waveguide that are coplanar, parallel to one another and arranged symmetrically on either side of an axis whose projection in the plane XY is along an axis Y' different from the axis X, called pairs of guides along Y',

the pairs of guides along X being electrically insulated from the pairs of guides along Y', the projections in the plane XY of the first pair furthest from X and of the second pair furthest from Y' forming, at their intersection, a parallelogram (P) with a centre O,

- a first conductive wire (W1) having a projection in the plane XY along X or Y' or a diagonal (D1, D2) of said parallelogram, the first conductive wire being adapted to be flowed through by a direct current,
- said first wire having a flaring so as to take the form of a surface (S) whose projection in the plane XY incorporates said parallelogram (P) and exhibits symmetry about the point O,

the method further comprising the steps consisting of :

A generating a cloud of said ultra-cold atoms (12), this including phases of emitting said atoms, of cooling said atoms, of initialising said atoms to at least one internal state |a> and of trapping a cloud of said ultra-cold atoms in a local potential minimum,

B initialising internal states by coherently superposing said ultra-cold atoms between said state |a> and an internal state |b> different from |a> by a first pulse $\pi/2$;

C spatially separating a cloud of said atoms of said internal state |a> in one trap (T1) from a cloud of said atoms of said internal state |b> in another trap (T2), and moving said traps in an opposite direction along a closed path contained in a plane perpendicular to the measurement axis and initialised from point O:

- by applying a voltage or a current with predetermined microwave frequencies to said waveguides in a predetermined sequence, - and by applying a constant direct current or voltage to the first and, if applicable, to the second conductive wire(s),

D recombining said internal states |a> and |b> by applying to said ultra-cold atoms a second pulse $\pi/2$ then measuring the density of atoms in an internal state chosen from at least |a> and |b>;

E determining the Sagnac phase of said ultra-cold atoms and computing the speed of rotation of said sensor about said measurement axis,

23. The measurement method according to the preceding claim, for measuring a speed of rotation about the axis Z, wherein, during step C, said sequence includes applying, at certain times, a microwave signal formed by the superposition of a microwave signal with an angular frequency $\omega a$ and a microwave signal with an angular frequency $\omega b$ to at least one of the guides along X of at least the first pair closest to the axis X, or applying a microwave signal formed by the superposition of a microwave signal with an angular frequency $\omega a'$ and a microwave signal with an angular frequency $\omega b'$ to at least one of the guides along Y' of at least the second pair closest to the axis Y'.

24. The measurement method according to Claim 22, for measuring a speed of rotation about the axis X or the axis Y', wherein, during step C, said sequence includes:

- for measuring the speed of rotation about the axis X, applying, at certain times, a microwave signal formed by the superposition of a microwave signal with an angular frequency $\omega a$ and a microwave signal with an angular frequency $\omega b$, simultaneously to the two guides along X of the first pair closest to the axis X,
- for measuring the speed of rotation about the axis Y', applying, at certain times, a microwave signal formed by the superposition of a microwave signal with an angular frequency $\omega a'$ and a microwave signal with an angular frequency $cob'$, simultaneously to the two guides along Y' of the second pair closest to the axis Y'.

25. The measurement method according to one of claims 22 to 24, the atom chip further comprising a first (W1C) and a second (W2C) loading wire that are conductive and electrically insulated from the first wire and, where applicable, the second conductive wire(s), whose projections in the plane XY are secant at O, and wherein, in step A, the cloud of ultra-cold atoms is trapped close to the atom chip using said loading wires.

FIG.1

FIG.2

FIG.3

FIG.4a

34

FIG.4b

FIG.5

FIG.6

FIG.7

FIG.8a

EP 4 102 181 B1

FIG.8b

EP 4 102 181 B1

FIG.9

FIG.10

FIG.11

FIG.12

EP 4 102 181 B1

EP 4 102 181 B1

Plan XY

← Guides selon X

← Guides selon Y

← W1/W2

← W1C/W2C

~ Sub

## FIG.13

FIG.14

FIG.15

EP 4 102 181 B1

FIG.16

$P_{CPWX1'}$

t

$P_{CPWX1}$

t

$P_{CPWX2}$

t

$P_{CPWX2'}$

t

$P_{CPWY1'}$

t

$P_{CPWY1}$

t

$P_{CPWY2}$

t

$P_{CPWY2'}$

t

$t_0$   $t_1$   $t_2$   $t_3$   $t_4$   $t_5$   $t_6$   $t_7$   $t_8$   $t_9$   $t_{10}$   $t_{11}$   $t_{12}$

# FIG.17

$\omega a$ CPW

$\omega b$ CPW

$\omega a'$ and $\omega b'$ CPW

FIG.17bis

FIG.18

Inactive CPW

ωa CPW

ωb CPW

ωa' and ωb' CPW

EP 4 102 181 B1

FIG.19

FIG.20

EP 4 102 181 B1

FIG.21

ωa CPW
ωb CPW
ωa' and ωb' CPW

FIG.22

FIG.23

W2m,Ym CPWY1m
CPWY2m
CPWY2'm CPWY1'm

W2m+1,Ym+1

AchM

Ach(n,m)

CPWX1'n
CPWX1n

W1n, Xn

CPWX2n

CPWX2'n

W1n+1, Xn+1

EP 4 102 181 B1

56

FIG.24

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2017089489 A

- FR 2004743

**Littérature non-brevet citée dans la description**

- **AMMAR et al.** Symmetric microwave potential for interferometry with thermal atoms on a chip ». *Phys. Rev.*, 2015, vol. A91, 053623